(19) Europäisches Patentamt
European Patent Office
Office européen des brevets

(11) EP 1 604 415 B1

(12) **EUROPEAN PATENT SPECIFICATION**

(45) Date of publication and mention
of the grant of the patent:
**21.11.2012 Bulletin 2012/47**

(21) Application number: **04723041.2**

(22) Date of filing: **24.03.2004**

(51) Int Cl.:
*H01M 4/38* (2006.01)     *H01M 10/052* (2010.01)

(86) International application number:
**PCT/JP2004/004071**

(87) International publication number:
**WO 2004/086539 (07.10.2004 Gazette 2004/41)**

(54) **ELECTRODE MATERIAL FOR LITHIUM SECONDARY BATTERY AND ELECTRODE STRUCTURE COMPRISING SAID ELECTRODE MATERIAL**

ELEKTRODENMATERIAL FÜR EINE LITHIUM-SEKUNDÄRBATTERIE UND ELEKTRODENSTRUKTUR DAS BESAGTE ELEKTRODENMATERIAL ENTHALTEND

MATÉRIAU D'ÉLECTRODE POUR BATTERIE SECONDAIRE AU LITHIUM ET STRUCTURE D'ÉLECTRODE COMPORTANT LEDIT MATÉRIAU

(84) Designated Contracting States:
**AT BE BG CH CY CZ DE DK EE ES FI FR GB GR HU IE IT LI LU MC NL PL PT RO SE SI SK TR**

(30) Priority: **26.03.2003 JP 2003086564**

(43) Date of publication of application:
**14.12.2005 Bulletin 2005/50**

(60) Divisional application:
**10189793.2 / 2 302 720**

(73) Proprietor: **CANON KABUSHIKI KAISHA**
**Ohta-ku**
**Tokyo 146-8501 (JP)**

(72) Inventors:
• **KAWAKAMI, Soichiro;**
**c/o Canon Kabushiki Kaisha**
**Ohta-ku, Tokyo 1468501 (JP)**
• **ASAO, Masaya;**
**c/o Canon Kabushiki Kaisha**
**Ohta-ku, Tokyo 1468501 (JP)**
• **SUZUKI, Nobuyuki;**
**c/o Canon Kabushiki Kaisha**
**Ohta-ku, Tokyo 1468501 (JP)**
• **YAMADA, Yasuhiro;**
**c/o Canon Kabushiki Kaisha**
**Ohta-ku, Tokyo 1468501 (JP)**
• **OGURA, Takao;**
**c/o Canon Kabushiki Kaisha**
**Ohta-ku, Tokyo 1468501 (JP)**

(74) Representative: **TBK**
**Bavariaring 4-6**
**80336 München (DE)**

(56) References cited:
**EP-A- 0 883 199      EP-A- 1 028 476
EP-A- 1 033 767      EP-A- 1 100 134
EP-A- 1 102 339      EP-A- 1 274 140
EP-A- 1 313 158      WO-A-02/21616
JP-A- 10 162 823     JP-A- 11 007 979
JP-A- 2000 357 515   JP-A- 2001 243 946
JP-A- 2002 042 805   JP-A- 2003 077 529
JP-A- 2003 109 590**

**Description**

TECHNICAL FIELD

The present invention relates to an electrode material for a lithium secondary battery which comprises particles having silicon as a main component, an electrode structure having the electrode material and a secondary battery having the electrode structure.

BACKGROUND ART

Recently, it has been said that because the amount of $CO_2$ gas contained in the air is increasing, global warming may be occurring due to the greenhouse effect. Thermal power plants use fossil fuels to convert thermal energy into electric energy, however they exhaust a large amount of $CO_2$ gas, thereby making construction of such additional thermal power plants difficult. Accordingly, for effective use of electric power generated in thermal power plants, load levelling approaches have been proposed wherein electric power generated at night which is surplus power may be stored in a household secondary battery, whereby the stored electric power can be used during the daytime when electric power consumption increases.

In addition, the development of a high energy-density secondary battery has been demanded for electric vehicles which do not exhaust air pollutants such as $CO_x$, $NO_x$, and hydrocarbons. Further, the development of compact, lightweight, high performance secondary batteries is urgently demanded for applications in portable electrical equipment such as book size personal computers, video cameras, digital cameras, mobile telephones and PDAs (Personal Digital Assistant).

As such a lightweight, compact secondary battery, development of a rocking chair type battery referred to as a "lithium ion battery," which during a charging reaction use a carbonaceous material represented by graphite as a negative electrode substance for allowing lithium ions to intercalate between the planar layers of a 6-membered network-structure formed from carbon atoms, and use a lithium intercalation compound as a positive electrode substance for allowing lithium ions to deintercalate from between layers.

However, with this "lithium ion battery", because the negative electrode formed from a carbonaceous material can theoretically only intercalate a maximum of 1/6 of the lithium atoms per carbon atom, a high energy density secondary battery comparable with a lithium primary battery when using metallic lithium as the negative electrode material has not been realized.

During charging, however, if an amount higher than the theoretical amount of lithium is tried to be intercalated at a negative electrode comprising carbon of a "lithium ion battery", or charging is performed under high electric current conditions, lithium metal in a dendrite shape develops on the carbon negative electrode surface, possibly ultimately resulting in an internal short-circuit between the negative electrode and positive electrode from the repeated charge/discharge cycles. A "lithium ion battery" which has a capacity higher than the theoretical capacity of a graphite negative electrode does not have a sufficient cycle life.

On the other hand, a high-capacity lithium secondary battery that uses metal lithium for the negative electrode has been drawing attention as a secondary battery having a high energy density but not put in practical use yet.

This is because the charge/discharge cycle life is very short. This short charge/discharge cycle life is considered to be primarily due to the facts that metal lithium reacts with impurities such as water or an organic solvent contained in the electrolyte to form an insulating film on the electrodes, and that the foil surface of metallic lithium has an irregular surface wherein portions to which electric field converges exist, so that repeated charging and discharging causes lithium to develop in a dendrite shape, resulting in an internal short-circuit between the negative and positive electrodes, thereby leading to the end of the battery life.

In order to control this reaction of the problem, in which metal lithium reacts with water and organic solvents contained in the electrolyte, of secondary batteries which use metal lithium negative electrodes, a method which uses a lithium alloy composed of lithium and aluminum as the negative electrode has been proposed.

However, such a lithium alloy is not currently in wide practical use because the lithium alloy is too hard to wind in a spiral form, and therefore a spiral-wound type cylindrical battery cannot be made, because the charge/discharge cycle life is not sufficiently increased, and because a battery using a lithium alloy for the negative electrode does not have a sufficient energy density comparable to a battery using metal lithium.

In order to resolve problems such as these, heretofore, U.S. Patent No. 6,051,340, U.S. Patent No. 5,795,679, U.S. Patent No. 6,432,585, Japanese Patent Application Laid-Open No. H11-283627, Japanese Patent Application Laid-Open No. 2000-311681 and International Publication WO 00/17949 have proposed a secondary battery which uses a negative electrode comprising elemental tin or silicon.

U.S. Patent No. 6,051,340 discloses a lithium secondary battery which uses a negative electrode comprising an electrode layer formed of a metal such as silicon or tin alloyed with lithium, and a metal such as nickel or copper not alloyed with lithium on a current collector of a metal material which does not alloy with lithium.

U.S. Patent No. 5,795,679 discloses a lithium secondary battery using a negative electrode formed from a metallic powder alloying an element such as tin with an element such as nickel or copper. U.S. Patent No. 6,432,585 discloses a lithium secondary battery wherein the electrode material layer contains 35% or more by weight of a powder comprising silicon or tin with a average particle diameter of 0.5 to 60 $\mu$m, and which uses a negative electrode having a porosity ratio of 0.10 to 0.86 and a density of 1.00 to 6.56 g/cm$^3$.

Japanese Patent Application Laid-Open No. H11-283627 discloses a lithium secondary battery which uses a negative electrode comprising silicon or tin having an amorphous phase. Japanese Patent Application Laid-Open No. 2000-311681 discloses a lithium secondary battery which uses a negative electrode comprising particles of an amorphous tin-transition metal element alloy with a substantially non-stoichiometric composition. International Publication WO 00/17949 discloses a negative electrode for a lithium secondary battery, comprising particles of an amorphous silicon-transition metal element alloy with a substantially non-stoichiometric composition.

However, the electric capacity efficiency resulting from lithium release compared to the electric capacity efficiency resulting from first lithium insertion in the lithium secondary battery according to each of the proposals does not match the same level of performance as the electrical efficiency of a graphite negative electrode, so that further improvements in efficiency have been awaited. In addition, since resistance of the electrode of the lithium secondary battery of the above proposals is higher than that of a graphite electrode, lowering of the resistance has been desired.

Japanese Patent Application Laid-Open No. 2000-215887 discloses a high-capacity high charging/discharging efficiency lithium secondary battery which suppresses volume swelling when alloying with lithium to prevent break-down of the electrode by increasing conductivity of the electrode by forming a carbon layer the surface of a metal or semi-metal which can alloy with lithium, in particular silicon particles, through chemical vapor disposition with thermal decomposition of benzene and the like.

However, for these lithium secondary batteries, compared against a theoretical charge capacity of 4200 mAh/g calculated from Li$_{4.4}$Si as the compound of silicon and lithium, an electrode performance allowing lithium insertion/release of an electric charge which exceeds 1000 mAh/g has not been reached, making the development of a high-capacity, long life negative electrode desirable.

Also EP 1 313 158 (A), EP 1 274 140 (A), WO 02/21616 (A), JP 2001-243946, EP 1 102 339 (A), EP 1 100 134 (A), JP 2000-357515, EP 1 028 476 (A), JP 11-007979, EP 0 883 199 (A), JP 10-162823, JP 2002-042805, JP 2003-109590, and JP 2003-077529 relate to electrode materials relevant for the present invention.

DISCLOSURE OF THE INVENTION

The present invention has been accomplished in view of the aforementioned problems, and it is an object of the present invention to provide an electrode material for a lithium secondary battery, having low resistance, high charge/release efficiency and high capacity; an electrode structure having the electrode material; and a secondary battery having the electrode structure.

The electrode material of the present invention for a lithium secondary battery is defined according to claim 1. Preferred embodiments are depicted in the dependent claims the material. comprises particles of a solid state silicon alloy having silicon as a main component, wherein the particles of the solid state alloy have a microcrystal or amorphous material comprising an element other than silicon, dispersed in a microcrystalline silicon or amorphized silicon material. Here the solid state alloy contains a pure metal or a solid solution. Further, the alloy has an element composition in which the alloy has a single phase in the melted liquid solution state. In other words, the element composition is a composition in which the alloy is completely mixed in the melted liquid solution, whereby two or more phases are not present in a melted liquid state, which is determined by element species and atomic ratio of elements.

Further, the alloy is composed of silicon, at least a first element A and a second element E each having a lower atomic ratio than silicon; the atomic ratio of the first element A is higher than the atomic ratio of the second element E; the first element A is at least one element selected from the group consisting of tin, aluminum and zinc; the second element E is at least one element selected from the group consisting of copper, silver, zinc, titanium, aluminum, vanadium, yttrium, zirconium and boron; and the first element and the second element are different from each other (A $\neq$ E). The alloy further contains a eutectic, wherein the eutectic is selected from the group consisting of:

    (a) a eutectic of silicon and the first element A;
    (b) a eutectic of silicon and the second element E;
    (c) a eutectic of the first element A and the second element E, the first element and the second element being different from each other;
    (d) a eutectic of any combination of (a), (b), and (c).

BRIEF DESCRIPTION OF THE DRAWINGS

FIG. 1A and FIG. 1B are schematic views of silicon alloy particles according to the present invention;
FIG. 2A, FIG. 2B and FIG. 2C are views for illustrating a lithium insertion reaction for intrinsic silicon, p-type silicon and n-type silicon;
FIG. 3A and FIG. 3B are conceptual views schematically illustrating a cross-section of one embodiment of an electrode structure comprising a negative electrode material fine powder for a lithium secondary battery according to the present invention;
FIG. 4 is a conceptual view schematically illustrating a cross-section of one embodiment of a secondary battery (lithium secondary battery) according to the present invention;
FIG. 5 is a cross-sectional view of a single layer, flat type (coin type) battery; and
FIG. 6 is a cross-sectional view of a spiral-wound type cylindrical battery.

BEST MODE FOR CARRYING OUT THE INVENTION

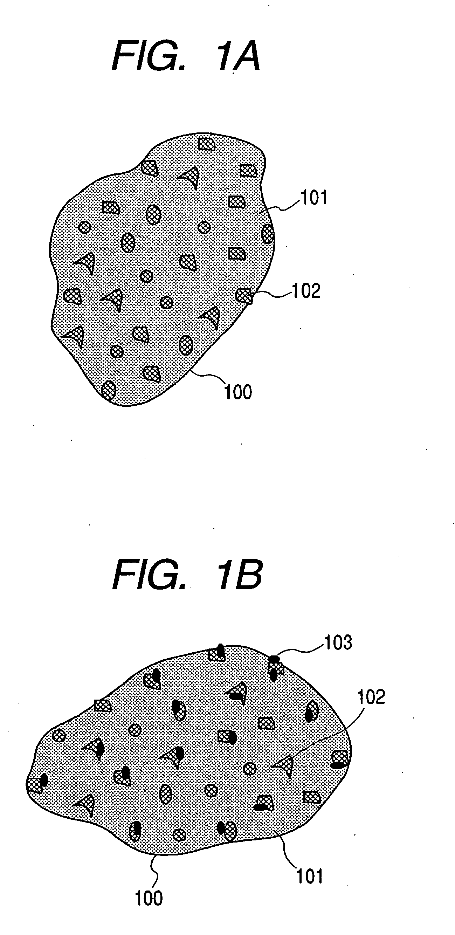

The present invention will hereinafter be explained referring to FIGS. 1A to 6.
The present inventors investigated the relationship between a silicon dopant and the electric insertion/release charge and insertion/release potential of lithium by conducting the following experiment.
Namely, into p-type silicon powder made of high purity silicon doped with boron and n-type silicon powder.made of high purity silicon doped with phosphorous or antimony, were mixed graphite acting as a conductive auxiliary material and a binder. This mixture was applied onto copper foil to prepare an electrode (silicon electrode). Using metal lithium as the opposite electrode, the electric charge from the electrochemical insertion/release of lithium (electric charge of lithium insertion/release) was measured at the silicon electrode using an electrolyte solution of 1 M (mole/liter) of a salt of $LiPF_6$ dissolved in an organic solvent of ethylene carbonate mixed with ethyl carbonate in a volume ratio of 3:7.
The results showed that for both the highly doped n-type silicon and p-type silicon, electric charge of lithium insertion/release and the efficiency of release with respect to insertion were large, and the potential change of lithium insertion/release with respect to lithium was small, so that a curve plotting electric potential versus electric charge at lithium release time was rather flat. The results also showed that selection of the type of dopant and the doping amount could be used to control electric capacity and potential. It is thought that the electrochemical reaction is allowed to proceed smoothly because highly doped silicon has low resistance, whereby electron conductivity is high, so that when such silicon is formed into an electrode to make the resistance of the electrode itself low.
For repeated electrochemical lithium insertion/release, silicon particles doped with boron had smaller decrease in the lithium insertion/release amount, which allowed for more stable in-out of the lithium.
The reasons for this include:

(i) A p-type dopant atom such as a boron atom, which substitutes for a silicon atom, is negatively ionized, so that the insertion of lithium ions, which tend to be positively ionized to release an election, is not hindered.
(ii) If a p-type dopant is doped into the specific resistance of silicon decreases, whereby the resistance of the electrode decreases.

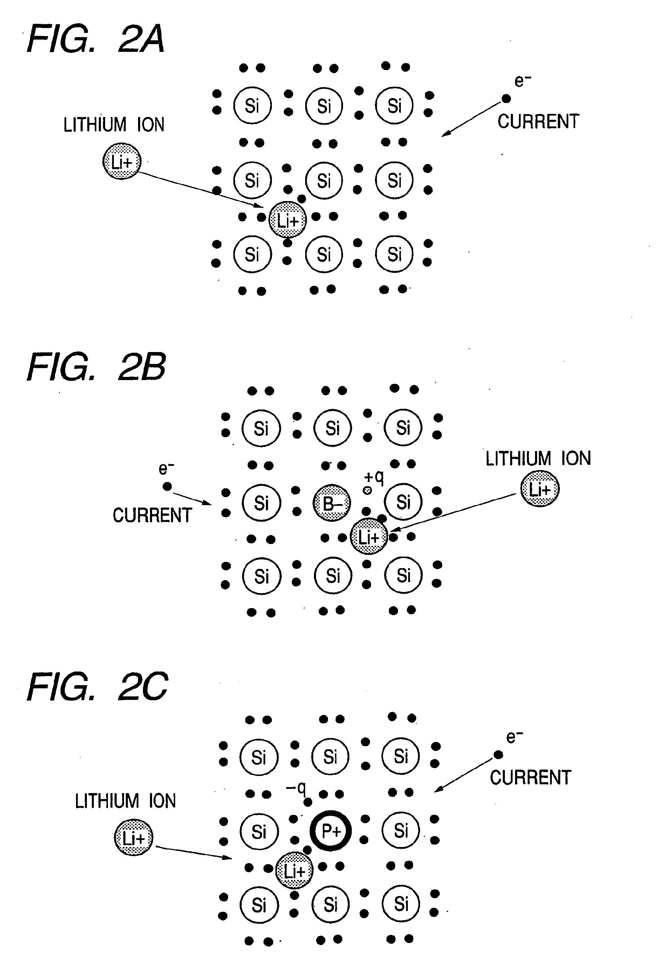

FIGS. 2A to 2C are views schematically showing the reaction of lithium being electrochemically inserted into silicon crystal, and FIG. 2A shows silicon of an intrinsic semiconductor not containing any impurity atoms. (Actually there would be some impurity atoms contained.)
FIG. 2B shows a p-type silicon doped with boron as the impurity atom. In this case, it can be expected that an attractive force will exist between the lithium atoms, which tend to form positive ions, and the boron atoms, which tend to form negative ions, whereby it can be guessed that insertion of lithium ions would be easy.
FIG. 2C shows an n-type silicon doped with phosphorous as the impurity atom. In this case, it can be expected that a repulsion force will exist between the lithium atoms, which tend to form positive ions, and the phosphorous atoms, which tend to form positive ions, whereby it can be guessed that insertion of lithium ions would not be easy.
The above results show that when p-type silicon, particularly silicon doped with boron, is used as a material for the negative electrode of a lithium secondary battery, the resistance of the negative electrode decreases and the lithium ion insertion reaction may easily occur.
The doping amount of the above p-type dopant and n-type dopant is in the range that lowers the resistance of an electrode used in a lithium secondary battery, and increases storage capacity. This range is preferably $1 \times 10^{-8}$ to $2 \times 10^{-1}$ in terms of atomic ratio with respect to silicon, and $1 \times 10^{-5}$ to $1 \times 10^{-1}$ is more preferable. To decrease resistance, simultaneously doping with both the above p-type dopant and n-type dopant is preferable. While the above p-type dopant may also include aluminum and gallium, boron having a small ionic radius is more preferable. Further, when doping, the addition of boron in excess of the solid solution threshold is effective in amorphization. For that reason, an electrode having a long cycle life can be prepared when using, as a negative electrode material for a lithium secondary battery, particles or an alloy having boron-doped silicon as a main component.

The present inventors also investigated the electric charge, charge efficiency and swelling ratio when electrochemical lithium insertion/release is repeated on an electrode using silicon alloy particles as an electrode material. The results showed that nonuniformity in the distribution of elements within the alloy particles was low and that smaller silicon crystalline particles obtain a higher lithium insertion/release electric charge. The results also showed that it is possible to carry out repeated lithium insertion/release with stability and that an electrode with a low swelling ratio can be prepared.

A preferable embodiment of the present invention directed to making the distribution of elements within the alloy particles more uniform, and to making the size of the silicon crystallite particles smaller was carried out. This embodiment showed that it is effective to prepare the element composition of the silicon alloy such that:

(1) Silicon and elements other than silicon which constitute the silicon alloy are in a melted solution state to provide a uniform solution.
(2) The silicon alloy contains a eutectic, (this eutectic may contain a eutectic of silicon and a first element A described below, silicon and a second element E described below, first element A and second element E and combinations thereof)
(3) The intermetallic compound formed between silicon and elements other than silicon which constitutes the silicon alloy is not readily crystalized.

In the present invention it is preferable to employ a composition close to its eutectic point, since amorphization tends to occur close to the eutectic point.

The ability of silicon to store lithium decreases if an intermetallic compound forms between the silicon and elements other than silicon. Therefore, the alloy particles comprising the electrode material of the present invention preferably include a pure metal or a solid solution, because it is thought that a pure metal or solid solution is superior to intermetallic compounds regarding lithium insertion/release. This is, of course, not to deny the presence of silicon intermetallic compounds in the alloy metal, but the ratio of silicon intermetallic compounds is preferably 0 or at a very low level. Preferable alloy particles used in the present invention may be a pure metal and a solid state coexisting, or may be either or both of a pure metal and a solid state coexisting with an intermetallic compound.

The ratio of silicon contained in the above silicon alloy is, in order to express high storage performance, preferably 50 % by weight or more and 95 % by weight or less, and more preferably 50 % by weight or more and 90 % by weight or less.

In addition to the above configuration of the alloy composition, atomizing or pulverizing the silicon alloy particles to an average particle diameter preferably in the range of 0.02 $\mu$m to 5 $\mu$m, more preferably 0.05 $\mu$m to 3 $\mu$m and most preferably 0.1 $\mu$m to 1 $\mu$m, as well as amorphization of the silicon alloy, are effective to obtain the desired performance. Here, amorphization means a structure which comprises an amorphous phase, wherein sections where stripes were not observed were confirmed to exist by observation of the crystal lattice image with a high resolution transmission electron microscope. The crystallite size of the amorphized particles in the silicon alloy particles observed from the transmission electron microscope is preferably in the range of 1 nm to 100 nm, and more preferably in the range of 5 nm to 50 nm.

Through the processes of atomizing, pulverizing or amorphization of the above silicon composition, it is possible to produce a structure having a microcrystal or amorphous material, which contains an element other than silicon, and which is dispersed in microcrystalline silicon or amorphized silicon of a silicon alloy microstructure. Here, the pulverized fine powder is an agglomeration of "fine particles". While silicon can electrochemically release and receive a large amount of lithium, by making the silicon crystallite small, the lithium insertion/release reaction can be made uniform. This, in turn, allows the volume swelling and contraction due to the repeated insertion/release to be made uniform, thereby lengthening the cycle life.

FIGS. 1A and 1B are cross-sectional views schematically showing the silicon alloy particles of the present invention finely pulverized or amorphized. In FIGS. 1A and 1B, reference numeral 100 denotes a silicon alloy particle, reference numeral 101 denotes a group of silicon crystals microcrystallized or amorphized, reference numeral 102 denotes a group of crystals of a first element (other than silicon) contained in the silicon alloy microcrystallized or amorphized and reference numeral 103 denotes a group of crystals microcrystallized or amorphized of a second element (other than silicon) contained in the silicon alloy.

That is, the silicon alloy particles 100 of FIG. 1A are alloy particles which comprise at least a silicon element and a first element, and the silicon alloy particles 100 of FIG. 1B are alloy particles which comprise at least a silicon element, a first element and a second element.

A uniformly melted solution can be solidified to form the silicon alloy of the element composition in the manner of the above-mentioned (1). However, when the difference in melting points between silicon and the first element, which next silicon is the main component of the silicon alloy, is large, for example, when the first element is tin, even if the melted liquid is rapidly cooled, the segregation of lower melting point tin separates is generated at the particle boundaries of silicon. For that reason, a uniform alloy composition cannot be obtained for an alloy of silicon and tin. To resolve this problem, an alloy obtained by the rapid cooling of a liquid melted from the alloy composition materials is pulverized into a fine powder, then by a method of mechanical alloying using a grinder such as ball mill, the alloy composition is simultaneously made uniform (uniform dispersion of the component elements within the alloy) and amorphized. In this way, multi components alloy alloy particles 100 in which the constituent elements are uniformly dispersed, such as those shown in FIGS. 1A and 1B, can be formed without silicon becoming segregated with the an element other than silicon.

The silicon alloy particles 100 of one preferable embodiment of the present invention, when used as the negative electrode material of a lithium secondary battery, can make lithium insertion during charging more uniform, and swelling more uniform when the lithium is inserted, thereby reducing swelling volume. Thus, the production of a lithium secondary battery having increased storage capacity, improved charging/discharging efficiency and long charge/discharge cycle life can be achieved.

The microstructure of the silicon alloy particles 100 of the present invention can be observed by selected-area electron diffraction analysis using a transmission electron microscope. The degree of microcrystallization or amorphization can be evaluated by calculating the X-ray diffraction peak half width values. If the ratio of the amorphous phase becomes larger, the peak half value width of the X-ray diffraction chart peak widens and the peak becomes broader although the peak is sharp for crystalline phase. It may noted that the half value width for the diffraction intensity at $2\theta$ of the main peak of the X-ray diffraction chart peak is preferably 0.1° or more, and more preferably 0.2° or more. The crystallite size calculated from the X-ray diffraction peak half width values is preferably 60 nm or less, and more preferably 30 nm or less.

In order to make the crystallite size of silicon or the silicon alloy smaller, it is effective to add boron at the solid solution threshold or more, or yttrium or zirconium. The amount of boron added is preferably in the range of 0.1 to 5% by weight. The amount added of the yttrium or zirconium is preferably in the range of 0.1 to 1% by weight.

However, while it is thought that the insertion/release reaction of lithium occurs at the boundary of the crystal, because the number of particle boundaries is increased by the microcrystallization or amorphization of the silicon or silicon alloy crystal, the insertion/release of lithium becomes uniform, thereby increasing storage capacity and charging/discharging efficiency.

Microcrystallization or amorphization of the crystal also allows the crystal structure to lose its long distance orderliness. This means that the degree of freedom increases thus reducing deformation in the crystal structure during lithium insertion. As a result, swelling during lithium insertion is also reduced. In addition, the amorphization of silicon is further promoted by the repeated insertion/release of lithium.

When the silicon alloy particles according to the present invention are employed as a negative electrode for a lithium secondary battery, a secondary battery which has high charging/discharging efficiency, high capacity and a long charge/discharge cycle life can be obtained. The reason for the longer cycle life is thought to be that deformation in the crystal structure due to repeated lithium insertion/release is small.

When a silicon alloy comprises silicon and a first element A (outside the scope of claim 1), which has a lower atomic ratio than silicon, but has the next highest atomic ratio after silicon (refer to FIG. 1A), in view of the above (1), (2) and (3), the first element A is preferably at least one element selected from the group consisting of tin, indium, gallium, copper, aluminum, silver, zinc, titanium and germanium. If the first element is selected from the group consisting of tin, indium, gallium, aluminum, zinc, silver and germanium, which can electrochemically insert and release lithium, it has the same effect as of silicon crystalline particles mentioned above, whereby a high performance material can be obtained for a negative electrode for a lithium secondary battery. Among the above first elements, germanium is expensive and therefore is not suitable from the standpoint of providing a low cost electrode material.

For an alloy of silicon and tin, indium, gallium, aluminum, zinc or silver, the elements are respectively uniform in a melted liquid solution state, but do not mutually soluted in a solid state. For an alloy of silicon and silver, a eutectic of Si and Ag crystallizes. For an alloy of silicon and aluminum, the melted liquid state is uniform, causing a partial solid solution, whereby a eutectic of Si and Si-Al solid solution crystallizes.

For an alloy of silicon and titanium, silicon is preferably 67 atomic% or above, wherein in this range the melted liquid state is uniform. Further, silicon at 85 atomic% or above is more preferable. In this case generation of $TiSi_2$ intermetallic compounds is low, and a eutectic of Si and $TiSi_2$ crystallizes. For that reason, for an alloy formed from silicon and titanium, the composition preferably has the ratio of silicon atoms to titanium atoms close to 85:15. However, from the standpoint of increasing storage performance, the silicon ratio is preferably higher.

For an alloy of silicon and copper, where silicon is 50 atomic% or more preferably as is the case in the present invention, the melted liquid state is uniform, wherein the generation of $Cu_3Si$ intermetallic compounds is low, and a eutectic of Si and $Cu_3Si$ crystallizes.

The above eutectics are effective in that the crystallite in the alloy can be made small. Compositions close to the eutectic point are also more easily amorphized.

The silicon alloy according to the invention comprises silicon, a first element A, and a second element E, wherein the first element A has a lower atomic ratio than silicon, but has the next highest atomic ratio, and the second element E has the next highest atomic ratio after the first element A (refer to FIG. 1B). The first element A is at least one element selected from the group consisting of tin, aluminum and zinc, and the second element E at least one element selected from the group consisting of copper, silver, zinc, titanium, aluminum, vanadium, yttrium, zirconium and boron (the first element A and the second element E are different elements).

The effect of this second element E is that it crystallizes a eutectic with the first element A and makes the crystallite of first element A smaller, or crystallizes a eutectic with silicon and makes the crystallite of silicon smaller. Further, the second element E forms an oxide more easily than silicon, making it effective in suppressing the generation of a silicon oxide. If a large amount of silicon oxides exist in the silicon or silicon alloy, lithium oxide forms from the electrochemical lithium insertion reaction, which is a factor in lowering the efficiency of the amount of lithium released (discharged) with respect to the amount of lithium inserted.

Specific preferable examples of the above silicon alloy comprising three or more elements (Si-A-E alloy) include alloys such as Si-Sn-Ti alloy, Si-Sn-Al alloy, Si-Sn-Zn alloy, Si-Sn-Ag alloy, Si-Sn-B alloy, Si-Sn-Sb-B alloy, Si-Sn-Cu-B alloy, Si-Sn-Cu-Sb-B alloy, Si-Al-Cu alloy, Si-Al-Ti alloy, Si-Al-Zn alloy, Si-Al-Ag alloy, Si-Zn-Ti alloy, Si-Zn-Sn alloy, Si-Zn-Al alloy, Si-Zn-Ag alloy, Si-Zn-Cu alloy, Si-Sn-Al-Ti alloy, Si-Sn-Zn-Ti alloy and Si-Sn-Ag-Ti alloy.

The Sn-Zn based alloys have a eutectic point close to the atomic ratio Sn:Zn = 85:15; the Sn-Ag based alloys have a eutectic point close to the atomic ratio Sn:Ag = 95:5; the Sn-Al based alloys have a eutectic point close to the atomic ratio Sn:Al = 97:3; the Al-Cu based alloys have a eutectic point close to the atomic ratio Al:Cu = 82:18; and the Al-Zn based alloys have a eutectic point close to the atomic ratio Al:Zn = 89:11.

Sn, Zn, Al and Ag crystal particles become smaller by eutectic crystallizing. For the above silicon alloy, it is preferable to retain a silicon ratio which can maintain capacity as a negative electrode material for a lithium secondary battery, and therefore preferable to select a composition in which elements other than silicon crystallize. For above silicon alloys comprising three or more elements, if the alloy comprises tin, aluminum, zinc, or silver, which can electrochemically insert/release lithium, it is preferable to select a composition close to the eutectic point so that the crystals become microcrystalline or amorphous.

In the above silicon alloys it is preferable to dope with at least one p-type dopant selected from the group consisting of boron, aluminum, gallium, antimony and phosphorous having an atomic ratio in the range of $1 \times 10^{-8}$ to $2 \times 10^{-1}$ with respect to silicon to lower electrical resistance and increase capacity, while doping in the range of $1 \times 10^{-5}$ to $1 \times 10^{-1}$ is more preferable. In particular, the dopant is still more preferably, boron, which is a p-type dopant having a small ionic radius.

When aluminum or titanium, vanadium, yttrium and zirconium is employed as one of the composition elements of the silicon alloy according to the present invention, an additional effect is that during the preparation process of the silicon alloy, or the pulverizing process, oxygen reacting with silicon to form silicon oxide can be suppressed. This is because the aluminum atom, or titanium, vanadium, yttrium or zirconium atom form a more stable bond with the oxygen atom than silicon. Note that if silicon oxide forms, the efficiency of the electrochemical insertion/release of lithium decreases. This is thought that lithium reacts with the silicon oxide to form inert lithium oxide.

The average particle diameter of primary particles of the above silicon or silicon alloy of the present invention is, as a negative electrode material for a lithium secondary battery, preferably in the range of 0.02 to 5.0 $\mu$m, and more preferably in the range of 0.05 to 3.0 $\mu$m, so that the electrochemical insertion/release of lithium occurs uniformly and rapidly.

If the average particle diameter is too fine, handling becomes more difficult. If such too fine particles are used to form an electrode, the contact surface area between particles increases, thereby increasing contact resistance. Congregating the primary particles to make the particles larger allows for easier handling, and leads to a decrease in electrical resistance.

Further, for silicon particles having silicon as a main component, or silicon alloy particles having silicon as a main component, complexing with a carbonaceous material or metal magnesium or a carbonaceous material and metal magnesium, can increase performance relating to battery charging/discharging efficiency, battery voltage, release current characteristics, repeated charge/discharge characteristics and the like, if such complexed material is used as the negative electrode for a lithium secondary battery.

The complexing of a carbonaceous material can lower fatigue caused by volume swelling and contraction during repeated electrochemical lithium insertion/release (discharge), thereby extending life. The amount to be added to the alloy having silicon as a main component is preferably 1 to 10% by weight, and more preferably 2 to 5% by weight, where the amount of lithium insertion/release (discharge) does not remarkably decrease.

Complexing with magnesium metal is effective in increasing battery voltage if the complex is used to form a lithium secondary battery. If the ratio of complexed magnesium metal is increased, battery voltage increases. However, in such a case because the ratio of silicon decreases, the storable electric capacity decreases.

Further, to prevent the uppermost surface of the finely powdered silicon powder, or silicon alloy powder from rapidly reacting with oxygen, it is preferable to cover the surface with a thin oxide of about 2 to 10 nm. The oxide film thickness can be measured by analyzing the depth profile of the oxygen element with a surface analyzer such as that of scanning micro-auger analysis.

In the present specification, the term "average particle diameter" means the average primary particle diameter (average particle diameter in a non-clustered state).

The microcrystallized or amorphized silicon or silicon alloy particles according to the present invention, in addition to the above X-ray diffraction analysis, may also be evaluated by electron diffraction, neutron diffraction, high resolution electron microscope observation and the like.

For electron diffraction, when amorphization has progressed evaluation will yield a halo shape diffraction chart. For high resolution electron microscope observation, evaluation will provide a microcrystalline structure in which a striped lattice image is observed (a stripe pattern is interspersed) showing fine defined regions, or a maze-like pattern of an amorphized structure which does not show lattice striping may be observed.

Information relating to the atomic distance from a central atom using the radial distribution function obtained from the extended X-ray absorption fine structure (often abbreviated as "EXAFS") of analysis of X-ray absorption fine structure (often abbreviated as "XAFS") can also be obtained. From this, if amorphization has progressed it can be observed whether long distance orderliness of the atomic distance has been lost.

In the present invention the crystallite size of the particles can be determined using the following Scherrer formula from the diffraction angle and half value width of an X-ray diffraction curve using CuK$\alpha$ at the radiation source.

$$\mathtt{Lc=0.94\lambda/(\beta cos\theta)\ (Scherrer's\ Formula)}$$

Lc: crystallite size
$\lambda$: wavelength of X-ray beam
$\beta$: half width value of an X-ray diffraction peak (radian)
$\theta$: Bragg angle of the diffraction line

The crystallite size obtained by the above formula becomes smaller as amorphization progresses.

The crystallite size of the electrode material according to the present invention calculated from the above formula is preferably 60 nm or less, and more preferably 30 nm or less. When an amorphized above material is used as the negative electrode material of a lithium secondary battery, deformation caused by the swelling and contraction from repeated lithium insertion/release (discharge) according to charge/discharge can be suppressed, and cycle life is long.

Next, a method for preparing the silicon particles and silicon alloy particles will be explained.

The silicon particles having silicon as a main component, are prepared by mixing specific amounts of the silicon basic ingredient and doping element material, then melting and cooling to form a silicon ingot. The ingot is then pulverized in a multistage process to give a fine powder having an average particle diameter of 0.1 to 1.0 $\mu$m. Apparatuses which can be used for the pulverizing process include a ball-type mill such as a planetary-type ball mill, an vibration ball mill, a conical mill and a tube mill; a media type mill such as an agitating grinder type, a sand grinder type, an anealer type and a tower type. The ball material for the above grinding media is preferably zirconia, stainless steel or steel. The dopant is preferably boron, antimony, or phosphorous, and more preferable is boron.

The silicon alloy particles according to the present invention are prepared by mixing specific amounts of a metal material of a first element, if desired a metal material of a second element and a doping element material to a basic ingredient of silicon, which mixture is melted to form a molten metal, then cooled to prepare powder shaped silicon alloy particles. For the atomization method, methods such as gas atomization for atomizing with a high-pressure inert gas, water atomization for atomizing with high-pressure water and the like can be used.

Cooling of the above molten metal is preferably performed rapidly. This is because the molten metal state as described above is in a uniformly dissolved state, whereby rapidly cooling the molten metal will give a more uniform composition for the silicon alloy which comprises elements having different melting points. The speed of such cooling is preferably within the range of $10^3$ to $10^8$ K/s.

Once an ingot of the above silicon alloy has been formed, a fine powder can be obtained through a multi-stage pulverisation process preferably having an average particle diameter of 0.02 $\mu$m to 5.0 $\mu$m, more preferably 0.05 $\mu$m to 3.0 $\mu$m and still more preferably 0.1 $\mu$m to 1.0 $\mu$m. Further, by planetary-type ball mill treatment and the like, amorphization can be achieved. An vibration mill, a planetary-type ball mill, a high-speed rotation mill and the like are preferable as the pulverizing apparatus for amorphization.

More preferable methods include atomization methods such as a method of mixing materials to become the ingredients, melting them to form a molten metal, then injecting the molten materials with inert gas to form a powder (so-called gas atomization method); a method of forming a powder by blowing the molten materials onto a rotating disk or injects the molten materials with highly pressurized water (so-called water atomization); and a method of pouring a sprayed metal into a high-revolution water stream (spraying method). After once the particle powder is formed, it is further pulverized to obtain a silicon powder or silicon alloy powder having an average particle diameter of preferably 0.02 $\mu$m to 5.0 $\mu$m, more preferably 0.05 $\mu$m to 3.0 $\mu$m and still more preferably 0.1 $\mu$m to 1.0 $\mu$m.

When the molten metal is injected, element composition within the injected alloy particles can be made even more uniform by subjecting it to ultrasonic waves. Further, by increasing the cooling speed in the above atomization method, amorphization can be performed more easily. In the above atomization method, the powder can be treated with an amorphization pulverizer such as a ball mill to make the distribution of the elements in the alloy more even, and to promote amorphization of the alloy.

Once the materials making up the ingredients have been mixed and melted to form a molten metal, a silicon powder or silicon alloy powder can be obtained by rapidly cooling with a gun method, a single roll method or a double roll method, then pulverizing the obtained powder or ribbon. The preferable average thickness of the present invention is 0.02 $\mu$m to 5.0 $\mu$m, more preferably 0.05 $\mu$m to 3.0 $\mu$m and still more preferably 0.1 $\mu$m to 1.0 $\mu$m. The obtained powder can be further amorphized by treating with a ball mill and the like.

In the above ball treatment, in order to suppress a treated fine powder from reacting with oxygen, it is preferable to add before treating an antioxidant such as graphite, alcohol or an aliphatic acid to the silicon powder or silicon alloy powder. Because graphite is hard and not very malleable or ductile, it does not easily solidify, which makes it effective in preventing the material adhering to the pulverizing vessel. Further, graphite is chemically stable, not readily oxidized, and also does not easily alloy, so that it is possible to prevent the oxidation of the above pulverized anode material particle by covering its surface.

When complexing carbon materials or magnesium metal with silicon or silicon alloy particles, it is preferable to perform pulverization such as ball milling under a mixing condition more gentle than that of amorphization.

An amorphized fine powder having a particle diameter of 10 to 100 nm can be obtained by supplying the ingredients of the present invention, silicon powder or silicon alloy powder, as material for evaporation in a plasma gas energized with high frequency waves in an inert gas. The plasma can be made more stable and the fine powder can be obtained more efficiently by applying a magnetic field when energizing with the high frequency waves.

It is preferable to cover the surface of the fine powder with an oxide-film or carbon-film as the above silicon powder or silicon alloy powder is vulnerable to oxidation in air and can easily dissolve in aqueous alkaline solution. A thin oxide-film can be formed on the surface of the fine powder by carrying out the micro-pulverization process in a solution such as alcohol.

A thin oxide-film can be also formed on the surface of the fine powder by exposing the fine powder to an inert gas atmosphere such as nitrogen gas or argon gas containing a low concentration of oxygen gas prior to pulverizing.

The oxygen concentration in the nitrogen gas or inert gas is preferably in the range of 0.01 to 5.0 volume%, and more preferably in the range of 0.05 to 2.0 volume%. The weight percentage of oxygen in the fine powder having a thin oxide-film formed on its surface is preferably in the range of 0.1 to 15% by weight, and more preferably in the range of 0.2 to 10% by weight, and still more preferably in the range of 0.2 to 5% by weight.

A high discharge amount and high charging/discharging efficiency cannot be achieved when.the silicon powder or silicon alloy powder of the present invention containing a high oxygen or oxide weight is used as an electrode material for a lithium secondary battery. This is because the lithium reacts with the oxide during lithium insertion, changing to an inert substance such as lithium oxide, thus preventing electrochemical discharge.

Unless the amount of oxygen, in other words the amount of oxide, is sufficient to become an oxidation preventing film covering the surface of the silicon powder or silicon alloy powder of the present invention, the present powders will easily oxidize in air to form an inert product in the charge/discharge reaction of the slurry battery.

The above carbon-film for preventing oxidation may be formed by mixing a fine powder carbon content such as graphite powder or acetylene black when pulverizing or amorphizing the silicon or silicon powder.

The silicon fine particles or silicon alloy fine particles of the present invention can be formed by a method such as sputtering, electron beam deposition, and cluster ion beam deposition.

When using silicon as a basic ingredient of the present invention, impurities such as Ca, Al, and Fe may be contained. To provide a low cost negative electrode for a lithium secondary battery, 99.99% purity or less is preferable, 99.9 or less is more preferable and 99.6% or less is still more preferable.

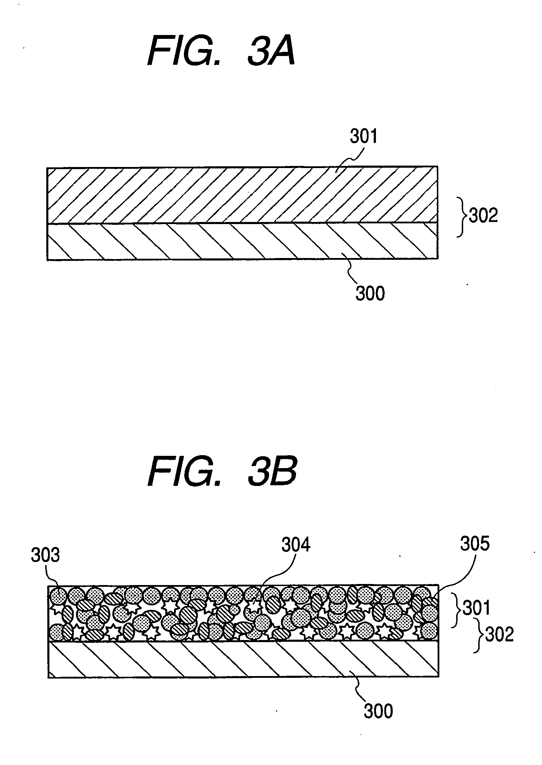

FIGS. 3A and 3B illustrate schematically sections of the electrode structure according to the present invention. In FIG. 3A, reference numeral 302 represents an electrode structure, wherein this electrode structure 302 comprises an electrode material layer 301 and a current collector 300. This electrode material layer 301 comprises, as illustrated in FIG. 2B or FIG. 1A or FIG. 1B, particles (active material) 303 having silicon as a main component (silicon Si or silicon alloy powder), a conductive auxiliary material 304 and a binder 305. While in FIGS. 3A and 3B the electrode material layer 301 is provided only on one surface of the current collector 300, depending on the battery configuration, an electrode material layer may be formed on both sides of the current collector 300.

The content of conductive auxiliary material 304 is preferably 5% or more by weight and 40% or less by weight, and more preferably 10% or more by weight and 30% or less by weight. The content of binder 305 is preferably 2% or more by weight and 20% or less by weight, and more preferably 5% or more by weight and 15% or less by weight. The content of particles 303 having silicon as a main component contained in the electrode material 301 is preferably within the range of 40% by weight to 93% by weight.

The conductive auxiliary material 304 includes graphite structure carbonaceous materials, such as graphite, carbon fiber and carbon nanotubes; and amorphous carbons such as acetylene black and ketjen black; nickel, copper, silver, titanium, platinum, aluminum, cobalt, iron, chrome and the like, although graphite is preferable. The shape of the conductive auxiliary material is preferably a shape selected from shapes such as spherical, flake-shaped, filament-shaped, fiber-shaped, spike-shaped and needle-shaped. In addition, by employing two or more different shapes in the powder, packing density when forming the electrode material layer can be increased thus reducing impedance of the electrode structure 302.

The material for the binder 305 may include a water soluble polymer such as polyvinyl alcohol, water soluble ethylene-vinyl alcohol polymer, polyvinyl butyral, polyethylene glycol, sodium carboxymethyl cellulose and hydroxyethyl cellulose; a fluorocarbon resin such as polyvinylidene fluoride and vinylidene fluoride-hexafluoropropylene copolymer; a polyolefin such as polyethylene and polypropylene; styrene-butadiene rubber, polyimide, polyamic acid (polyimide precursor) and polyamide-imide. Materials having a tensile strength of 100 to 400 MPa, stretch ratio of 40 to 100% are preferable as the binder, and polyimide, polyamic acid (polyimide precursor) and polyamide-imide are more preferable.

It is preferable when forming the electrode to complex the binder by adding a polymer which can absorb the solvent of the electrolyte solution by gelling, such as polyacrylonitrile or polymethylmethacrylate. This improves permeation and decreases the resistance of the electrode.

In addition, it is desirable for the material forming the current collector 300 to have high electric conductance, and be an inert material in battery reactions, in particular when applying an electrode structure 302 to the negative electrode of a secondary battery. This is because the current collector 300 is designed for efficiently supplying the current to be consumed by the electrode reaction when charging, or collecting the electric current generated when discharging. Preferable materials include at least one metallic material selected from the group consisting of copper, nickel, iron, stainless steel, titanium and platinum. More preferable materials include copper, which is low in cost and has low electrical resistance.

Further, while the shape of the current collector is a sheet shape, this "sheet shape" is, within the scope of practical use, not particularly limited in thickness, wherein thickness may be about 100 $\mu$m or less, and includes a so-called "foil" shape. A sheet shape used, for example, in making a mesh shape, sponge shape and a fiber shape, or punching metal, expanded metal can be employed.

Next, a procedure for preparing the electrode structure 302 will be explained.

First, a binder 305 and a conductive auxiliary material were mixed with the silicon powder or silicon alloy powder composed of particles having silicon as a main component according to the present invention, to which an appropriate solvent for the binder 305 was added and kneaded to prepare a slurry. Next, the prepared slurry was applied to a current collector 300, dried and after forming an electrode material layer 301, was subjected to press processing, wherein the thickness and density of the electrode material layer 301 was adjusted to form an electrode structure 302.

A coater coating method, for example, or a screen printing method can be used for the above application method. In addition, the main component can be mixed with the conductive auxiliary material 304 and binder 305, without adding a solvent, and the conductive auxiliary material 304 alone may be pressure formed with the above negative electrode material, without mixing with the binder 305, to form an electrode material layer 301.

If the electrode material layer 301 density is too high, swelling when lithium is inserted becomes large, thereby causing peeling off from the current collector 300 to occur. If the electrode material layer 301 density is too low electrode resistance becomes high, thereby leading to a lowering in charging/discharging efficiency and a large drop in voltage of the battery when discharging. For these reasons, the density of the electrode material layer 301 according to the present invention is preferably within a range of 0.8 to 2.0 g/cm$^3$, and more preferably within a range of 0.9 to 1.5 g/cm$^3$.

An electrode structure 302 formed from only the silicon particles or silicon alloy particles of the present invention, without using the above conductive auxiliary material 304 or binder 305, can also be prepared by forming a direct electrode material layer 301 to the current collector 300 using a method such as sputtering, electron beam deposition, and cluster ion beam deposition.

However, if the thickness of the electrode material layer 301 is made thick, peeling tends to occur at the interface with the current collector 300, and therefore the above deposition methods are not suitable for forming a thick electrode structure 102. In order to prevent the above peeling, a metal layer or an oxide layer or a nitride layer is preferably provided in a thickness of 1 to 10 nm to the current collector 300 thereby forming concave and convex surfaces on the current collector 300 to improve interface adhesion. A more specific oxide layer or nitride layer preferably includes silicon or a metal oxide layer or nitride layer.

However, the secondary battery according to the present invention comprises an electrolyte, a positive electrode and a negative electrode used in an electrode structure having the above characteristics, and uses a lithium oxidation reaction and a lithium ion reduction reaction.

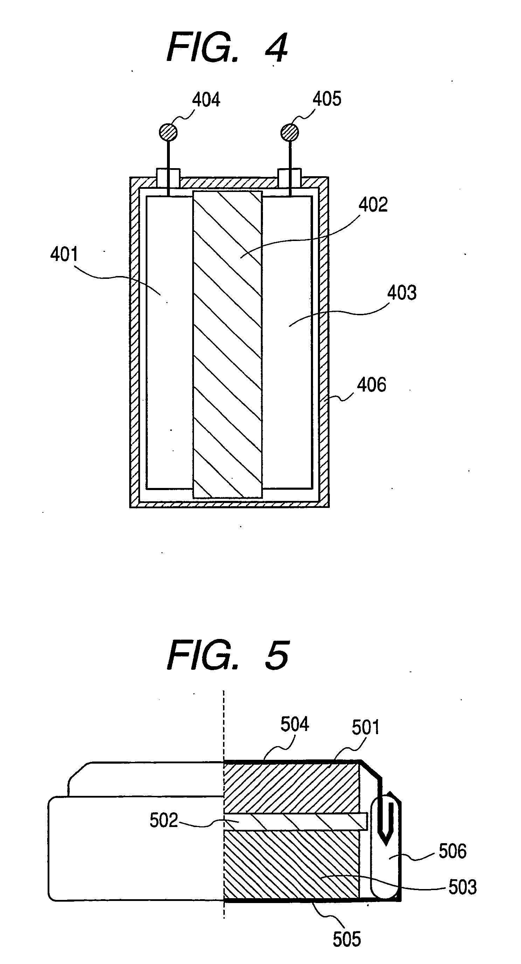

FIG. 4 is a view illustrating such a general structure of a lithium secondary battery according to the present invention, in which reference numeral 401 represents a negative electrode using an electrode structure of the present invention, reference numeral 402 an ionic conductor, reference numeral 403 a positive electrode, reference numeral 404 a negative electrode terminal, reference numeral 405 a positive electrode terminal and reference numeral 406 a battery case (housing).

The above secondary battery was assembled by sandwiching and laminating the ionic conductor 402 between the negative electrode 401 and the positive electrode 403 to form stacked electrodes, then after this stacked electrodes had been inserted into the battery case in dry air or a dry inert gas atmosphere in which the dew point was sufficiently controlled, respective electrodes 401, 403 were connected with the respective electrode terminals 404, 405, and the battery case sealed.

When using a material which retains the electrolyte on a micro-porous plastic film as the ionic conductor 402, the battery is assembled by forming the electrode bank so as to sandwich a micro-porous plastic film between the negative electrode 401 and the positive electrode 403 as a separator to prevent short-circuiting, then connecting the respective electrodes 401, 403 with the respective electrode terminals 404, 405 and sealing the battery case.

The lithium secondary battery which uses an electrode structure comprising an electrode material of the present invention on the negative electrode, has high charging/discharging efficiency and capacity and high energy density in accordance with the advantageous effects of the above negative electrode.

The positive electrode 403, which is the counter electrode of the lithium secondary battery using the electrode structure of the present invention on the negative electrode, is at least a source of lithium ions, comprising a positive electrode material serving as a lithium ion host material, and preferably comprises a current collector and a layer which is formed from a positive electrode material serving as a lithium ion host material. The layer formed from such a positive electrode material is, more preferably, a binder and a positive electrode material serving as a lithium ion host material, and may sometimes comprise a material to which a conductive auxiliary material has been added.

The positive electrode material serving as a host which is a source of lithium ions used in the lithium secondary battery of the present invention is preferably a lithium-transition metal (complex) oxide, lithium-transition metal (complex) sulfide, lithium-transition metal (complex) nitride or lithium-transition metal (complex) phosphate. The transition metal for the above transition metal oxide, transition metal sulfide, transition metal nitride or transition metal phosphate includes, for example, metal elements having a d-shell or an f-shell, i.e., Sc, Y, lanthanoids, actinoid, Ti, Zr, Hf, V, Nb, Ta, Cr, Mo, W, Mn, Tc, Re, Fe, Ru, Os, Co, Rh, Ir, Ni, Pb, Pt, Cu, Ag, and Au, and in particular Co, Ni, Mn, Fe, Cr, and Ti are preferable. The crystal grains can be made finer and insertion/release a larger amount of lithium can be performed with stability by incorporating 0.001 to 0.01 parts of yttrium (Y) element, or elements of Y and zirconium (Zr) to 1.0 parts of lithium to the lithium-transition metal (complex) oxide, lithium-transition metal (complex) sulfide, lithium-transition metal (complex) nitride or lithium-transition metal (complex) phosphate, in particular the lithium-transition metal (complex) oxide.

Where the above positive electrode active material is a powder, the positive electrode is made by using a binder, or made by forming the positive electrode active material layer on the current collector by sintering or depositing. Further, where the powder of the positive electrode active material has low conductivity, similar to the formation of the active material layer for the above electrode structure, mixing in an appropriate conductive auxiliary material is required. The conductive auxiliary materials and binders that may be used are the same as those which were mentioned above for the electrode structure 302 of the present invention.

The current collector material used for the above positive electrode is preferably a material such as aluminum, titanium, nickel and platinum which have high electrical conductivity, and, are inert in the battery reaction. Specifically, nickel, stainless steel, titanium and aluminum are preferable, of those aluminum is more preferable because it is low cost and has high electrical conductivity. In addition, while the shape of the current collector is a sheet shape, this "sheet shape" is, within the scope of practical use, not particularly limited in thickness, wherein thickness may be about 100 $\mu$m or less, and encompasses a so-called "foil" shape. The sheet shape used, for example, in making a mesh shape, sponge shape and a fiber shape, or punching metal, and expanded metal can be employed.

In addition, in the ionic conductor 402 of the lithium secondary battery of the present invention, lithium ion conductors such as a separator having an electrolyte solution (the electrolyte solution prepared by dissolving an electrolyte in a solvent) retained therein, a solid electrolyte, or a solidified electrolyte obtained by gelling an electrolyte solution with a polymer gel and a complex of a polymer gel and a solid electrolyte can be used. Here, the conductivity of the ionic conductor 402 at 25°C is preferably $1 \times 10^{-3}$ S/cm or more, and more preferably $5 \times 10^{-3}$ S/cm or more.

The electrolyte can include salts such as $LiBF_4$, $LiPF_6$, $LiAsF_6$, $LiClO_4$, $LiCF_3SO_3$, $LiBPh_4$, $LiSbF_6$, $LiC_4F_9SO_3$, $Li(CF_3SO_2)_2N$ and $Li(CF_3SO_2)_3C$ of lithium ions ($Li^+$) with a Lewis acid ion ($BF_4^-$, $PF_6^-$, $AsF_6^-$, $ClO_4^-$, $CF_3SO_3^-$, or $BPh_4^-$ (with Ph being a phenyl group) and mixtures thereof. It is desirable if the above salts are subjected to sufficient dehydration and deoxygenation by heating under low pressure.

The solvent for the electrolyte includes, for example, acetonitrile, benzonitrile, propylene carbonate, ethylene carbonate, dimethyl carbonate, diethyl carbonate, ethylmethyl carbonate, dimethyl formamide, tetrahydrofuran, nitrobenzene, dichloroethane, diethoxyethane, 1,2-dimethoxyethane, chlorobenzene, $\gamma$-butyrolactone, dioxolane, sulfolane, ni-tromethane, dimethyl sulfide, dimethyl sulfoxide, methyl formate, 3-methyl-2-oxazolidinone, 2-methyltetrahydrofulan, 3-propylsydnone, sulfur dioxide, phosphoryl chloride, thionyl chloride, sulfuryl chloride or a liquid mixture thereof. The above electrolyte solvent is preferably a combination of ethylene carbonate, $\gamma$-butyrolactone and diethyl carbonate, as such a combination is higher charge voltage and a degradation reaction is less likely to occur.

It is preferable to either dehydrate the above-mentioned solvent, for example, with activated alumina, a molecular sieve, phosphorus pentaoxide or calcium chloride, or depending on the solvent, to distill the solvent in an inert gas in the presence of an alkaline metal for elimination of impurities and dehydration.

In order to prevent leakage of the electrolyte solution, it is preferable to use a solid electrolyte or a solidified electrolyte. The solid electrolyte can include a glass material such as an oxide material comprising lithium, silicon, phosphorus, and oxygen elements, a polymer chelate of an organic polymer having an ether structure. The solidified electrolyte is preferably obtained by gelling the above electrolyte solution with a gelling agent to solidify the electrolyte solution.

It is desirable to use as the gelling agent a polymer which can absorb the solvent of the electrolyte solution by swelling, or a porous material such as silica gel, capable of absorbing a large amount of liquid. The polymer can include polyethylene oxide, polyvinyl alcohol, polyacrylonitrile, polymethylmethacrylate, and vinylidenefluoride-hexafluoropropylene copolymer. These polymers having a cross-linked structure are further preferable.

The ionic conductor 402 comprising the separator which carries out the role of prevention short-circuiting of the negative electrode 401 and the positive electrode 403 in the secondary battery, because on occasion it has a role in retaining the electrolyte solution, is required to have a plurality of fine pores through which lithium ions can pass, and be stable and insoluble in the electrolyte solution.

Accordingly, the ionic conductor 402 (separator) preferably comprises, for example, a micropore structure made of glass, a polyolefin such as polypropylene or polyethylene or a fluororesin and the like; or a nonwoven fabric. Alternatively, the ionic conductor may comprise a metal oxide film having a plurality of micropores or a resin film complexed with the metal oxide.

Next, the shape and structure of a secondary battery will be explained.

The specific shape of the secondary battery according to the present invention may be, for example, a flat shape, a cylindrical shape, a rectangular parallelepiped shape, a sheet shape or the like. The structure of the battery may be, for example, a single layer type, a multiple layer type, a spiral type or the like. Of those, a spiral type cylindrical battery permits an enlarged electrode surface area by rolling a separator which is sandwiched between a negative electrode and a positive electrode, thereby being capable of supplying a high current during charge/discharge. Furthermore, batteries having a rectangular parallelepiped shape or sheet shape permit effective utilization of accommodation space in appliances that will be configured by accommodating a plurality of batteries therein.

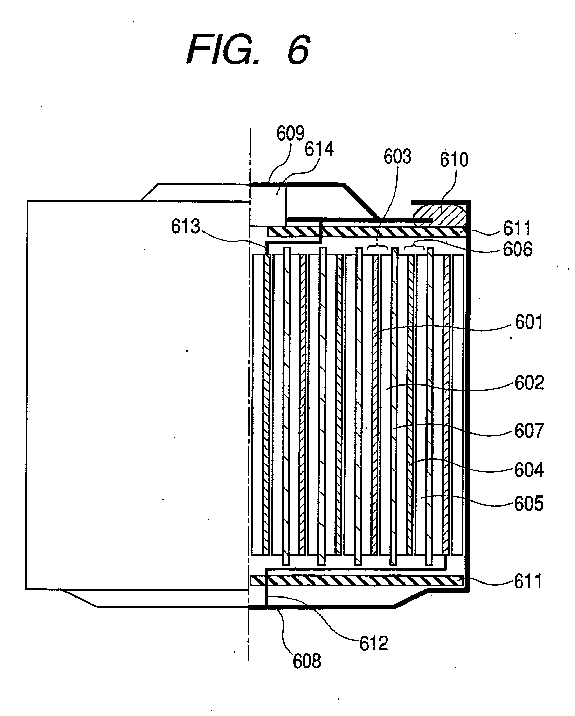

Now, description will be made in more detail of the shape and structure of the battery with reference to FIG. 5 and FIG. 6. FIG. 5 is a sectional view of a single layer type flat battery (a coin type) and FIG. 6 is a sectional view of a spiral type cylindrical battery. These lithium secondary batteries generally comprise the same structure as that illustrated in FIG. 4, a negative electrode, a positive electrode, an electrolyte, an ionic conductor, a battery housing and an output terminal.

In FIG. 5 and FIG. 6, reference numerals 501 and 603 represent negative electrodes, reference numerals 503 and 606 represent positive electrodes, reference numerals 504 and 608 represent a negative electrode cap and a negative electrode can, respectively, as the negative electrode terminal, reference numerals 505 and 609 represent a positive electrode can and a positive electrode cap, respectively, as the positive electrode terminal, reference numeral 502 and 607 represent ionic conductors, reference numerals 506 and 610 represent gaskets, reference numeral 601 represents a negative electrode current collector, reference numeral 604 represents a positive electrode current collector, reference numeral 611 represents an insulating sheet, reference numeral 612 represents a negative electrode lead, reference numeral 613 represents a positive electrode lead and reference numeral 614 represents a safety valve.

In the flat secondary battery (coin type) shown in FIG. 5, the positive electrode 503 that contains a positive electrode material layer and the negative electrode 501 that contains a negative electrode material layer are laminated with an ionic conductor 502 which is formed by a separator that retains at least an electrolyte solution therein, wherein the stack is accommodated from a side of the positive electrode into the positive electrode can 505 used as a positive terminal and the negative electrode is covered with the negative electrode cap 504 used as a negative electrode. A gasket 506 is provided in the remaining portions of the positive electrode can.

In the spiral type cylindrical secondary battery shown in FIG. 6, the positive electrode 606 having a positive electrode (material) layer 605 formed on the positive electrode current collector 604 is opposed to a negative electrode 603 having the negative electrode (material) layer 602 formed on the negative electrode current collector 601 via the ionic conductor 607 which is formed by a separator that retains at least an electrolyte solution therein so as to compose a cylindrical stack rolled up multiple times.

The cylindrical stack is accommodated in the positive electrode can 608 used as a positive electrode terminal. Furthermore, the positive electrode cap 609 is disposed as a positive electrode terminal on a side of an opening of the negative electrode can 608 and a gasket 610 is disposed in the remaining parts of the negative electrode can. The cylindrical electrode stack is separated from a side of a positive electrode cap by the insulating sheet 611.

The positive electrode 606 is connected to the positive electrode cap 609 by way of the positive electrode lead 613. The negative electrode 603 is connected to the negative electrode can 608 by way of the negative electrode lead 612. The safety valve 614 is disposed on the side of the positive electrode cap to adjust internal pressure of the battery. As mentioned above, the active material layer 602 of the negative electrode 603 use a layer comprising the above negative electrode material fine powder of the present invention.

Next, an example of assembling procedures for the battery shown in FIG. 5 and FIG. 6 will be described.

(1) Ionic conductors 502, 607 as separators are sandwiched between the negative electrodes 501, 603, and the formed positive electrodes 503, 606, and assembled into the positive electrode can 505 or negative electrode can 608.
(2) After pouring of the electrolyte solution, the negative electrode cap 504 or the positive electrode cap 609 is assembled with the gasket 506, 610.
(3) The assembly obtained in (2) above is caulked.

The battery is completed in this way. Note that the above-described preparation of the materials for the lithium battery and assembly of the battery is desirably carried out in dry air from which water has been removed sufficiently or in a dry inert gas.

Next, members comprising the secondary battery will be described.

The gaskets 506, 610 may comprise, for example, a fluororesin, a polyolefin resin, a polyamide resin, a polysulfone resin, or a rubber material. The sealing of the battery may be conducted by way of glass-sealing, sealing using an adhesive, welding or soldering, besides the caulking using the insulating packing shown in FIG. 5 and FIG. 6. The insulating plate 611 shown in FIG. 6 may comprise a material selected from organic resin materials and ceramics

The battery housing comprises the positive electrode can or the negative electrode can 505, 608, and the negative electrode cap or the positive electrode cap 504, 609. Such a battery housing preferably comprises a stainless steel sheet. Further, it may comprise an aluminum alloy, a titanium clad stainless steel sheet, a copper clad stainless steel sheet or a nickel plating steel sheet.

The positive electrode can 505 illustrated in FIG. 5 and the negative electrode can 608 illustrated in FIG. 6 also function as the battery housing (case) and as a terminal, and therefore stainless steel is preferable. However, where the positive electrode 505 or the negative electrode 608 do not function as the battery housing (case) or terminal, the material constituting the battery housing can include, in addition to stainless steel, a metallic material of iron or zinc, a plastic material of polypropylene or the like, a complexed material comprising a metallic material or a glass fiber and a plastic material.

In the rechargeable lithium battery, a safety valve 614 may be provided in order to ensure safety when the internal pressure in the battery is increased. The safety valve may comprise, for example, rubber, a spring, a metal ball or a rupture disk.

Examples

In the following, the present invention will be described in more detail with reference to examples.

[Preparation of the Electrode Material]

First, an example regarding the preparation of a negative electrode material will be explained.

(Reference Example 1)

Grained silicon (purity 99.6%) was mixed with a lump of titanium in an atomic ratio of 85:15 (weight ratio of 76.8:23.2), then formed in a vacuum into an Si-Ti alloy using an arc welder. Next, the Si-Ti alloy was melted using a single roll method apparatus to form a molten metal, which was rapidly cooled by blowing at a revolving copper roll in argon gas to prepare an Si-Ti alloy. The Si-Ti alloy was then pulverized for 2 hours with a planetary-type ball mill using silicon nitride balls in an argon gas atmosphere to obtain a fine powder for an electrode material.

(Reference Example 2)

Grained silicon (purity 99.6%) was mixed with a lump of titanium and a lump of boron in an atomic ratio of 85:

15:0.85 (weight ratio of 76.8:23.2:0.3), then formed in a vacuum into a boron doped Si-Ti alloy using an arc welder. Next, the boron doped Si-Ti alloy was melted using a single roll method apparatus to give a molten metal, which was rapidly cooled by blowing at a revolving copper roll in argon gas to prepare a boron doped Si-Ti alloy. The boron doped Si-Ti alloy was then pulverized for 2 hours with a planetary-type ball mill using silicon nitride balls in an argon gas atmosphere to obtain a fine powder for an electrode material.

(Example 3)

Grained silicon (purity 99.6%) was mixed with a lump of titanium in an atomic ratio of 85:15 (weight ratio of 76.8:23.2), then formed in a vacuum into an Si-Ti alloy using an arc welder. Next, grained tin was added to the Si-Ti alloy to make an atomic ratio of Si:Sn:Ti = 76.2:10.3:13.5 (weight ratio of 53.3:30.5:16.05), which was then melted using a single roll method apparatus to give a molten metal, and rapidly cooled by blowing at a revolving copper roll in argon gas to prepare an Si-Sn-Ti alloy. The Si-Sn-Ti alloy was then pulverized for 2 hours with a planetary-type ball mill using silicon nitride balls in an argon gas atmosphere to obtain a fine powder for an electrode material.

(Example 4)

The same procedure as in the above Example 3 was used except the following: grained tin was added to the Si-Ti alloy obtained by arc welding to make an atomic ratio of Si:Sn:Ti = 76.4:20.0:3.6 (weight ratio of 60:35:5), which was then melted using a single roll method apparatus to give a molten metal, and rapidly cooled by blowing at a revolving copper roll in argon gas to prepare an Si-Sn-Ti alloy. The Si-Sn-Ti alloy was then pulverized for 2 hours with a planetary-type ball mill using silicon nitride balls in an argon gas atmosphere to obtain a fine powder of Si-Sn-Ti alloy for an electrode material.

(Example 5)

Silicon, tin and aluminum were mixed in an atomic ratio of 74.0:19.4:6.6 (weight ratio of 60:35:5), and melted using a single roll method apparatus to give a molten metal. This molten metal was rapidly cooled by blowing at a revolving copper roll in argon gas to obtain an Si-Sn-Al alloy. The Si-Sn-Al alloy was then pulverized for 2 hours with a planetary-type ball mill using silicon nitride balls in an argon gas atmosphere to obtain a fine powder for an electrode material.

(Example 6)

Silicon, zinc and aluminum were mixed in an atomic ratio of 69.0:27.6:0.4 (weight ratio of 50.5:47.1:2.4), and melted in an argon gas atmosphere to give a molten metal, to obtain an Si-Zn-Al alloy powder using a gas atomization method injecting the melted metal in an atmosphere of an argon gas. Next, the Si-Zn-Al alloy powder was pulverized in isopropyl alcohol with a media mill using zirconia beads to give an Si-Zn-Al alloy fine powder having an average particle diameter of 0.3 $\mu$m for an electrode material. This Si-Zn-Al alloy fine powder was further pulverized for 2 hours with a planetary-type ball mill using silicon nitride balls in an argon gas atmosphere to obtain a fine powder for an electrode material.

(Example 7)

Silicon, aluminum and copper were mixed in an atomic ratio of 73.5:21.9:4.6 (weight ratio of 70:20:10), and melted using a single roll method apparatus to give a molten metal. This molten metal was rapidly cooled by blowing at a revolving copper roll in argon gas to obtain an Si-Al-Cu alloy. The Si-Al-Cu alloy was then pulverized for 2 hours with a planetary-type ball mill using silicon nitride balls in an argon gas atmosphere to obtain an Si-Al-Cu alloy fine powder for an electrode material.

(Example 8)

An Si-Sn-Al-Ti alloy powder for an electrode material was obtained according to the same method as Example 6, except for the mixing of silicon, tin, aluminum and titanium in an atomic ratio of 84.1:11.5:0.4:4.0 (weight ratio of 59.8: 35.0:0.2:5.0), to obtain an Si-Sn-Al-Ti alloy powder using the gas atomization method of Example 6.

(Example 9)

Silicon, tin and zinc were mixed in an atomic ratio of 81.0:16.2:2.8 (weight ratio of 51.9:43.9:4.2), and melted using a single roll method apparatus to give a molten metal. This molten metal was then injected with a highly pressurized water using a water atomization method to give an Si-Sn-Zn alloy. Next, the Si-Sn-Zn alloy powder was pulverized in isopropyl alcohol with a media mill using zirconia beads to give an Si-Sn-Zn alloy fine powder having an average particle diameter of 0.3 $\mu$m for an electrode material. This Si-Sn-Zn alloy fine powder was further pulverized for 2 hours with a planetary-type ball mill using silicon nitride balls in an argon gas atmosphere to obtain a fine powder for an electrode material.

(Example 10)

An Si-Sn-Ag alloy powder for an electrode material was obtained according to the same method as Example 5, except for the mixing of silicon, tin and silver in an atomic ratio of 81.8:17.1:1.1 (weight ratio of 63:35:2), to obtain an Si-Sn-Ag alloy powder using the single roll method apparatus of Example 5.

(Example 11)

An Si-Sn-Zn-Ti alloy powder for an electrode material was obtained according to the same method as Example 5, except for the mixing of silicon, tin, zinc, and titanium in an atomic ratio of 82.7:11.3:2.0:4.0 (weight ratio of 58.0:33.9: 3.3:4.8), to obtain an Si-Sn-Zn-Ti alloy powder using the water atomization method of Example 9.

(Example 12)

In the same way as Example 5, silicon, tin and Reference boron were mixed in a weight ratio of 62:36:2, and melted using a single roll method apparatus to give a molten metal. This molten metal was rapidly cooled by blowing at a revolving copper roll in argon gas to obtain an Si-Sn-B alloy. The Si-Sn-B alloy was then pulverized for 2 hours with a planetary-type ball mill using silicon nitride balls in an argon gas atmosphere to obtain an Si-Sn-B alloy fine powder for an electrode material.

(Reference Example 13)

An Si-Sn-Sb alloy powder for an electrode material was obtained according to the same method as Example 12, except for the mixing of silicon, tin and antimony in a weight ratio of 58:34:8, to obtain an Si-Sn-Sb alloy powder using a single roll method apparatus.

(Example 14)

An Si-Sn-Sb-B alloy powder for an electrode material was obtained according to the same method as Example 12, except for the mixing of silicon, tin, antimony and boron in a weight ratio of 60:35:4:1, to obtain an Si-Sn-Sb-B alloy powder using a single roll method apparatus.

(Example 15)

An Si-Sn-Cu-B alloy powder for an electrode material was obtained according to the same method as Example 12, except for the mixing of silicon, tin, copper and boron in a weight ratio of 59:34:5:2, to obtain an Si-Sn-Cu-B alloy powder using a single roll method apparatus.

(Example 16)

An Si-Sn-Al-B alloy powder for an electrode material was obtained according to the same method as Example 12, except for the mixing of silicon, tin, aluminum and boron in a weight ratio of 59:34:5:2, to obtain an Si-Sn-Al-B alloy powder using a single roll method apparatus.

(Example 17)

An Si-Sn-Al-Sb alloy powder for an electrode material was obtained according to the same method as Example 12, except for the mixing of silicon, tin, aluminum and antimony in a weight ratio of 56:33:4:7, to obtain an Si-Sn-Al-Sb alloy powder using a single roll method apparatus.

(Example 18)

An Si-Sn-Al-Sb-B alloy powder for an electrode material was obtained according to the same method as Example 12, except for the mixing of silicon, tin, aluminum, antimony and boron in a weight ratio of 58:34:5:2:1, to obtain an Si-Sn-Al-Sb-B alloy powder using a single roll method apparatus.

(Comparative Example 1)

Silicon powder having an average particle diameter of 10 $\mu$m and 99.6 wt% pure was pulverized in isopropyl alcohol with a media mill using zirconia beads to give an silicon fine powder having an average particle diameter of 0.3 $\mu$m. The silicon fine powder was then pulverized for 2 hours with a planetary-type ball mill using silicon nitride balls in an argon gas atmosphere to obtain a fine powder for an electrode material.

(Comparative Example 2)

Grained silicon (purity 99.6%) was mixed with a lump of titanium in an atomic ratio of 65:35 (weight ratio of 52: 48), then formed in a vacuum into an Si-Ti alloy using an arc welder. Next, the Si-Ti alloy was melted using a single roll method apparatus to give a molten metal, which was rapidly cooled by blowing at a revolving copper roll in argon gas to prepare an Si-Ti alloy. The Si-Ti alloy was then pulverized for 2 hours with a planetary-type ball mill using silicon nitride balls in an argon gas atmosphere to obtain a fine powder for an electrode material.
The above silicon and titanium composition tends to crystallize as solid $TiSi_2$ because these elements are only partly soluble in their melted liquid state, that is, liquids having a different concentration exist in the composition.

(Comparative Example 3)

Grained silicon (purity 99.6%) was mixed with grained nickel in an atomic ratio of 65.9:34.1 (weight ratio of 48: 52), then formed in a vacuum into an Si-Ni alloy using an arc welder. Next, the Si-Ni alloy was melted using a single roll method apparatus to give a molten metal, which was rapidly cooled by blowing at a revolving copper roll in argon gas to prepare an Si-Ni alloy. The Si-Ni alloy was then pulverized for 2 hours with a planetary-type ball mill using silicon nitride balls in an argon gas atmosphere to obtain a fine powder for an electrode material.
Silicon and nickel are known for their forming of intermetallic compounds (such as $NiSi_2$, NiSi, $Ni_2Si_3$ and $Ni_2Si$). The above composition of silicon and nickel tends to form $NiSi_2$.
Results of the analysis performed on the electrode materials obtained from the above Reference Examples 1,2 and 13 and Examples 3 to 12, and 14 to 18 and Comparative Examples 1 to 3 will now be explained.
Analysis of the silicon alloy for an electrode material was performed on factors which are thought to effect the negative electrode performance in a lithium secondary battery, such as, the microcrystal silicon or amorphous silicon, the microcrystals or amorphization of the crystals for the other elements forming the alloy and uniform element distribution within the alloy.
The silicon alloy crystal structure of the present invention suitable for the negative electrode of a lithium secondary battery comprises, for example, the following features: that silicon intermetallic compounds are small in number, as they are thought to lower lithium storage performance; that the crystals for each of the elements forming the alloy are microcrystals or have been amorphous; and that the distribution of elements in the alloy is uniform, without segregation.
The methods used for the analysis were X-ray diffraction analysis, observation by transmission electron microscope, energy dispersive X-ray spectroscopy (often called EDXS) analysis, electron diffraction analysis and the like.
The formation of intermetallic compounds can be confirmed from an X-ray diffraction chart or electron diffraction chart. When the crystals are microcrystals or have been amorphized, the half value width of the X-ray diffraction peak becomes broad, whereby the crystallite size calculated from Scherrer's formula is small. Also, the electron diffraction chart goes from a ring pattern to a halo pattern, and high-resolution observation using a transmission electron microscope shows tiny stripes or a maze-like pattern in the crystal lattice structure.
When distribution of the elements in the alloy is hardly segregated, i.e. the distribution is fairly uniform, this will be observed as an image with little segregation shading in the alloy particles using a transmission electron microscope (especially a dark-field image). Element distribution having little segregation can be observed using elemental mapping from EDXS analysis combined with the transmission electron microscope.
The analysis evaluation of the electrode material crystal structures obtained in Reference Examples 1,2, and 13 and Examples 3 to 12, and 14 to 18 showed that the X-ray peak half-value widths were broad, and tiny stripes or maze-like patterns in the crystal lattice structure were observed using a transmission electron microscope. It was understood from this that all of the examples were a material in which the structure was microcrystalline or had been amorphized. Further, using Scherrer's formula to check the crystallite sizes from the X-ray diffraction measurement results, all of the examples were in the range of 7 to 40 nm.

EDXS analysis relating to element distribution in the electrode material obtained from Examples and Reference Examples showed that there was little segregation of the elements in the alloy particles, so that as can be seen in sectional views FIG. 1A or FIG. 1B, element distribution was generally uniform. Examples and Reference examples were checked for silicon intermetallic compounds using selected-area electron diffraction from the X-ray diffraction and transmission electron microscope. Reference Examples 1 and 2 and examples 3, 4, 7, 8, 11 and 15, which were alloys containing titanium or copper, showed trace amounts of intermetallic compounds.

In contrast, analysis evaluation of the electrode material crystal structures obtained in Comparative Examples 2 and 3 showed that, compared with Reference Examples 1,2, and 13 and Examples 3 to 12, and 14 to 18 theX-ray peak half-value widths were narrow, and large stripe patterns of defined areas were observed using a transmission electron microscope. From the X-ray diffraction peak charts and the selected-area electron diffraction charts, it was confirmed that Comparative Example 2 contained $TiSi_2$ intermetallic compounds and that Comparative Example 3 contained $NiSi_2$ intermetallic compounds.

It was also confirmed using a transmission electron microscope (especially a dark-field image), that Comparative Examples 2 and 3 both had a large amount of segregation shading among the alloy particles. Further, from elemental mapping which combined EDXS analysis with the transmission electron microscope, it was confirmed that nickel or titanium were segregated among the alloy particles.

Next, as will be described in the following, electrode structures were prepared using the fine powder of the respective silicon or silicon alloys obtained according to the above-described procedures, for evaluation of the lithium insertion/release performance of the electrodes.

First, 66.5% by weight of each type of the silicon or silicon alloy fine powder obtained according to the above procedure, 10.0% by weight of a flat graphite powder as a conductive auxiliary material (specifically, graphite powder having a disk-like shaped particles having a diameter of about 5 $\mu$m and a thickness of about 1 $\mu$m), 6.0% by weight of a graphite powder (nearly-round shaped particles having an average particle size in a range of from 0.5 to 1.0 $\mu$m), 4.0% by weight of an acetylene black powder (nearly-round shaped particles having an average particle size of $4 \times 10^{-2}$ $\mu$m), 10.5% by weight of polyvinyl alcohol as a binder and 3.0% by weight of sodium carboxymethyl cellulose were mixed and kneaded while adding water to obtain a slurry.

This slurry was applied to a electrodeposition copper foil (an electrochemically produced copper foil) having a thickness of 15 $\mu$m by means of a coater and dried, and the thickness was adjusted with a rollpress to obtain an electrode structure having an active material layer with a thickness of 25 $\mu$m. The resultant electrode structure was cut to a square size of 2.5 cm $\times$ 2.5 cm and a copper tub was welded to obtain a silicon electrode.

[Evaluation Procedure for Lithium Charge/Discharge(Insertion/Release) Amount]

A lithium metal foil having a thickness of 100 $\mu$m was pressure bonded to a copper foil to obtain a lithium electrode. Next, ethylene carbonate and diethyl carbonate were mixed at a volume ratio of 3:7 to obtain an organic solvent, to which 1 M (mol/l) of $LiPF_6$ was dissolved to prepare an electrolyte solution.

The electrolyte solution was impregnated into a porous polyethylene film having a thickness of 25 $\mu$m. Next, the above silicon electrode was arranged on one surface of the polyethylene film and the above lithium electrode was arranged on the other surface of the polyethylene film so that the polyethylene film was sandwiched therebetween. In order to achieve flatness, this stack was pinched from both sides by a pair of glass plates, and then covered by an aluminum-laminated film to obtain an evaluation cell.

This aluminum-laminated film was a three-layered film comprising an outermost layer comprising a nylon film, a middle layer comprising an aluminum foil having a thickness of 20 $\mu$m and an inside layer comprising a laminated polyethylene film. The output terminal portions of each electrode were sealed by way of fusion. In order to evaluate the performance of the above electrode structure as the negative electrode, a lithium insertion/release cycle test (charge/discharge cycle test) was performed.

Namely, the lithium electrode as the anode and the silicon electrode as the cathode were set in the above evaluation cell and the cell was connected to the charge/discharge apparatus. First, the evaluation cell was discharged at a current density of 0.112 mA/cm$^2$ (70 mA per 1 g of the active material layer of a silicon electrode, that is, 70 mA/the weight in grams of the electrode layer) to insert lithium in the electrode material layer of the silicon electrode. Next, the evaluation cell was charged at a current density of 0.32 mA/cm$^2$ (200 mA/the weight in grams of the electrode layer) to release lithium from the electrode material layer of the silicon electrode, whereby the specific capacity per unit weight of the silicon electrode material layer, or the silicon powder or the silicon-based alloy powder, when lithium is inserted and released, was evaluated in a voltage range of 0 to 1.2 V.

The results of the lithium insertion/release performance evaluation of the above electrode structure are as follows.

First, for the first and tenth times, the ratio (efficiency) of electric charge resulting from lithium discharge compared with the electric charge resulting from lithium insertion was evaluated. For Comparative Examples 2 and 3 the first time efficiency was about 85%, and tenth time efficiency 98% or less. In contrast, for the electrodes prepared from the electrode material of Examples 1 to 18 of the present invention, first time efficiency was about 92% or above, and the tenth time efficiency was 99.5% or above.

For the electrodes prepared with the electrode material of Comparative Examples 2 and 3, the lithium discharged (released) electric charge on the tenth time had decreased to as low as 87% or less of that from the first time. In contrast, for electrodes prepared with the present electrode material, the lithium discharge electric charge on the tenth time was maintained at about 100% that of the first time.

For the electrode using the silicon powder of Comparative Example 1 the lithium insertion/release efficiency of the first and tenth times were respectively 89% and 98%. However, the lithium discharge electric charge at the tenth time had dropped to 70% of that at the first time.

The electric charge resulting from lithium discharge on the first time was as follows. For the electrodes prepared from an electrode material of the silicon alloy fine powder of Examples 1 to 18, all showed an electric charge of 1400 to 1800 mAh/g per electrode layer weight (excluding the current collector weight). The electrode prepared from the silicon fine powder of Comparative Example 1 showed a lithium first discharge electric charge of 2000 mAh/g per electrode layer weight. The electrodes prepared from the alloy fine powder of Comparative Examples 2 and 3 showed a lithium discharge electric charge of 400 or less mAh/g per electrode layer weight.

Thus, it was found that the silicon alloy electrodes prepared in the present examples have a longer cycle life, and can store and discharge about 4 to 6 times more electric charge (per electrode layer weight) than electrodes prepared from graphite.

The following Table 1 provides data for Examples 4, 5, 7, 10 and 12 to 18 regarding the peak half value width for silicon close to a diffraction angle of 2θ = 28.4° from X-ray diffraction analysis before and after treatment of the prepared alloy powder with a ball mill. Table 1 also shows the release (discharge) efficiency of the first insertion when an electrochemical Li insertion/release reaction occurred, and the electric charge resulting from Li discharge for the electrodes prepared using an alloy fine powder which had been treated with a ball mill.

Table 1

| Examples | Alloy Type | Half width (°) prior to treatment | Half width (°) after treatment | First time efficiency % | Li discharge capacity (mAh/g) |
|---|---|---|---|---|---|
| 4 | Si-Sn-Ti | 0.104 | 0.632 | 91.0 | 1350 |
| 5 | Si-Sn-Al | 0.131 | 0.242 | 90.8 | 1470 |
| 7 | Si-Al-Cu | 0.118 | 0.389 | 91.2 | 1600 |
| 10 | Si-Sn-Ag | 0.096 | 0.620 | 91.0 | 1500 |
| 12 | Si-Sn-B | 0.154 | 0.602 | 92.0 | 1500 |
| 13* | Si-Sn-Sb | 0.094 | 0.296 | 92.0 | 1550 |
| 14 | Si-Sn-Sb-B | 0.119 | 1.138 | 91.5 | 1550 |
| 15 | Si-Sn-Cu-B | 0.162 | 0.352 | 91.5 | 1600 |
| 16 | Si-Sn-Al-B | 0.113 | 0.288 | 90.8 | 1600 |
| 17 | Si-Sn-Al-Sb | 0.099 | 0.285 | 91.2 | 1550 |
| 18 | Si-Sn-Al-Sb-B | 0.202 | 0.227 | 90.8 | 1550 |
| * Reference Example | | | | | |

Table 1 shows that the release (discharge) efficiency for a first time lithium insertion is very high, and that the electric charge resulting from Li discharge per electrode layer weight is also very high. Further, while amorphization can be performed by treating with a ball mill, the results confirm that the alloy which had boron added in high concentration generally has a broad half width of peak relating to silicon from the X-ray diffraction chart even prior to ball mill treatment, and easily amorphizes. From experience, it is known that a lithium secondary battery using an amorphized negative electrode has a long charge/discharge cycle life.

Next, the electrode layer resistance was evaluated.

Each of the electrode material from Reference Examples 1,2, and 13, and Examples 3 to 12 and 14 to 18 was used to prepare a slurry in the same way as the preparation of the above electrode structure. Slurry was applied onto a polyester sheet, allowed to dry, then pressed with a roll press to give a sample electrode layer. The sheet resistance for this electrode layer was measured using a four-probe measurement method. The results showed that in all cases the electrode layers prepared from an electrode material doped with boron had a lower sheet resistance value than those that were not doped with boron.

Next, a secondary battery was prepared as Example 19 of the present invention.

(Example 19)

In the present example, an electrode structure provided with electrode layers on both sides of the current collector was prepared using the negative electrode material according to the present invention. The electrode structure thus prepared was used as a negative electrode, wherein a lithium secondary battery having 18650 size (diameter 18 mm$\phi$ × height 65 mm) and a cross-sectional structure as shown in FIG. 6 was prepared.

(1) Preparation of Negative Electrode 603

The negative electrode 603 was prepared according to the following procedure using each of the silicon alloy fine powders from Examples Reference Examples 1,2 and 13, and 3 to 12 and 14 to 18 as an electrode material. First, 69% by weight of silicon alloy fine powder was mixed with 10% by weight of a flat graphite powder as a conductive auxiliary material (specifically, graphite powder having a disk-like shaped particles having a diameter of about 5 $\mu$m and a thickness of about 1 $\mu$m), 6.0% by weight of a graphite powder (nearly-round shaped particles having an average particle size in a range of from 0.5 to 1.0 $\mu$m), 4.0% by weight of an acetylene black powder (nearly-round shaped particles having an average particle size of 4 × 10$^{-2}$ $\mu$m) and 11% by weight of the solid content of an adhesion agent (binder), which was calculated as a solid content from an N-methyl-2-pyrrolidone solution of 14% concentration polyamic acid (polyimide precursor), and N-methyl-2-pyrrolidone was added to the mixture to obtain a slurry. Next, the slurry was applied on both surfaces of a field copper foil (an electrochemically produced copper foil) having a thickness of 15 $\mu$m by means of a coater and dried, and the thickness was adjusted with a roll press to obtain an electrode structure having an active material layer with a thickness of 25 $\mu$m. This electrode structure was cut to a specified size, then a nickel ribbon lead was attached by spot welding to the top of the electrode, and dried at 150°C under reduced pressure to prepare the negative electrode 603.

(2) Preparation of the Positive Electrode 606

(i) Lithium citrate and cobalt nitrate were mixed at a mol ratio of 1:3, to which mixture citric acid was added and dissolved in ion-exchanged water to obtain a solution. The solution was sprayed in an air stream of 200°C to prepare an Li-Co oxide precursor fine powder.

(ii) The Li-Co oxide precursor fine powder prepared in the above was subjected to heat treatment in an air stream of 850°C.

(iii) To 92% by weight of the Li-Co oxide obtained in the above was mixed with 3% by weight of a graphite powder and 5% by weight of a polyvinylidene fluoride powder to obtain a mixture. This mixture was added with N-methyl-2-pyrrolidone, then stirred to obtain a slurry.

(iv) The slurry was applied on each surface of the aluminum foil having a thickness of 20 $\mu$m of the current collector 604, then dried and the thickness of one side of the positive.electrode material layer was adjusted with a rollpress machine to 90 $\mu$m. An aluminum lead was connected by an ultrasonic welding machine, and dried at 150°C under reduced pressure to prepare the positive electrode 606.

(3) Preparation Procedure for the Electrolyte Solution

(i) Ethylene carbonate whose water had been sufficiently removed and diethyl carbonate whose water had been sufficiently removed were mixed at a volume ratio of 3:7 to obtain a solvent.

(ii) To this solvent 1 M (mol/l) of lithium hexafluorophosphate (LiPF$_6$) was dissolved to obtain an electrolyte solution.

(4) Separator 607

A microporous polyethylene film having a thickness of 25 $\mu$m and was used as the separator.

(5) Battery Assembly

Assembly was entirely conducted in a dry atmosphere controlled with respect to water with a dew point of -50°C or less.

(i) The separator 607 was sandwiched between the negative electrode 603 and the positive electrode 606, then spirally wound so as to form a structure of separator/positive electrode/separator/negative electrode/separator, and inserted in negative electrode can 608 made of stainless steel.
(ii) Next, the negative electrode lead 612 was spot-welded to a bottom portion of the negative electrode can 608. A necking was formed at an upper portion of the negative electrode can by means of a necking apparatus, and the positive electrode lead 613 was welded to the positive electrode cap 609 provided with a gasket 610 made of polypropylene by means of spot welding machine.
(iii) Next, after an electrolyte solution had been poured in, the positive electrode cap was put on, wherein the positive electrode cap was caulked with the negative electrode can by a caulking machine and sealed to obtain the battery.

The negative electrode capacity of this battery, compared with the positive electrode, was made lager to produce a battery with a capacity regulated by a positive electrode.

(6) Evaluation

Charge/discharge was performed for each of the batteries, and the discharge capacity was measured.
The discharge capacities for the lithium secondary battery using the electrode structure formed from the electrode material of Examples 1 to 18 on the negative electrode all exceeded 2800 mAh, wherein the average operation voltage was 3.3 V.

(Example 20)

In the present example, an electrode structure provided with electrode layers on both sides of the current collector was prepared using the negative electrode material according to the present invention. The electrode structure thus prepared was used as a negative electrode, wherein a lithium secondary battery having 18650 size (diameter 18 mm$\phi$ × height 65 mm) and a cross-sectional structure as shown in FIG. 6 was prepared.

(1) Preparation of Negative Electrode 603

Silicon, tin and boron were mixed in the ratio of 74.5:25.0:0.5 by weight and melted in an argon gas atmosphere to give a molten metal. Using a pouring metal method, the molten metal was injected by argon gas into a high-revolution water stream, to give an Si-Sn-B alloy powder. Next, the Si-Sn-B alloy powder was pulverized in isopropyl alcohol with a media mill using zirconia beads to give an Si-Sn-B alloy fine powder having an average particle diameter of 0.3 $\mu$m. This Si-Sn-B alloy fine powder was further pulverized for 2 hours with an agitator using stainless steel balls in an argon gas atmosphere. To 100 parts by weight of this Si-Sn-B alloy fine powder, 2 parts of graphite powder, 1 part carbon fiber and 1 part multilayer carbon nanotube were added then pulverized to obtain a silicon fine powder complexed with a carbonaceous material for an electrode material.
Next, 69% by weight of the obtained silicon alloy fine powder complexed with the carbonaceous material was mixed with 10.0% by weight of a flat graphite powder as a conductive auxiliary material (specifically, graphite powder having a disk-like shaped particles having a diameter of about 5 $\mu$m and a thickness of about 1 $\mu$m), 10.0% by weight of a graphite powder (nearly-round shaped particles having an average particle size in a range of from 0.5 to 1.0 $\mu$m), and 11% by weight of solid content calculated from an N-methyl-2-pyrrolidone solution of polyamic acid (polyimide precursor) of 14% concentration solid content, and N-methyl-2-pyrrolidone was added to the mixture to obtain a slurry. Next, the slurry was applied on both surfaces of a field copper foil (an electrochemically produced copper foil) having a thickness of 10 $\mu$m by means of a coater and dried, and the thickness was adjusted with a roll press to obtain an electrode structure having an active material layer with a thickness of 25 $\mu$m. This electrode structure was cut to a specified size, then a nickel ribbon lead was attached by spot welding to the top of the electrode, and dried at 200°C under reduced pressure to prepare the negative electrode 603.

(2) Preparation of the Positive Electrode 606

(i) Lithium citrate and cobalt nitrate were mixed at a mol ratio of 1:3, to which mixture citric acid was added and dissolved in ion-exchanged water to obtain a solution. The solution was sprayed in an air stream of 200°C to prepare an Li-Co oxide precursor fine powder.
(ii) The Li-Co oxide precursor fine powder prepared in the above was subjected to heat treatment in an air stream of 850°C.
(iii) To 93% by weight of the Li-Co oxide, 3% by weight of a graphite powder and 1% by weight of carbon fibers were mixed, then N-methyl-2-pyrrolidone was added so as to have 3 % by weight of solid content of a polyamic acid (polyimide precursor), and stirred to obtain a slurry.
(iv) The slurry was applied to each surface of the aluminum foil current collector 604 having a thickness of 17 $\mu$m, then dried and the thickness of one side of:the positive electrode material layer was adjusted with a rollpress machine to 90 $\mu$m. An aluminum lead was connected by an ultrasonic welding machine, and dried at 200°C under reduced pressure to manufacture the positive electrode 606.

With the exception of the preparation of the positive and negative electrodes and using the polyethylene film having a thickness of 17 $\mu$m and micropores for the separator, the battery was prepared in the same way as in Example 19.
The results of a charge/discharge test carried out at fixed current and fixed voltage (maximum voltage of 4.2 V) showed that the discharge capacities all exceeded 3400 mAh, wherein the average operation voltage was 3.3 V. Further, results which tested the charge/discharge life of this battery showed that a repeated charge/discharge life 1.5 times greater than that not using a carbon complexed material could be obtained.

(Example 21)

With the exception of the below (1) Preparation of the Negative Electrode, a lithium secondary battery was prepared in the same way as that of Example 20, having the cross-sectional structure as shown in FIG. 6 with a 18650 size (diameter 18 mm$\phi$ $\times$ height 65 mm).

(1) Preparation of Negative Electrode 603

Silicon, tin and boron were mixed in the ratio of 74.5:25.0:0.5 by weight and melted in an argon gas atmosphere to give a molten metal. Using a water atomization method, the molten metal was injected with highly pressurized water to obtain an Si-Sn-B alloy powder. Next, the Si-Sn-B alloy powder was pulverized in isopropyl alcohol with a media mill using zirconia beads to give an Si-Sn-B alloy fine powder having an average particle diameter of 0.3 $\mu$m for an electrode material. This Si-Sn-B alloy fine powder was further pulverized for 2 hours with an agitator using stainless steel balls in an argon gas atmosphere. To 100 parts by weight of this Si-Sn-B alloy fine powder, 3 parts of graphite powder, 2 parts carbon fiber and 30 parts metal magnesium powder were added then pulverized to obtain a silicon fine powder complexed with a carbonaceous material and metal magnesium for an electrode material. A metal magnesium peak was observed from the results of X-ray diffraction analysis performed on the obtained alloy fine particles.
Next, 69% by weight of silicon alloy fine powder was mixed with 10.0% by weight of a flat graphite powder as a conductive auxiliary material (specifically, graphite powder having a disk-like shaped particles having a diameter of about 5 $\mu$m and a thickness of about 1 $\mu$m), 10.0% by weight of a graphite powder (nearly-round shaped particles having an average particle size in a range of from 0.5 to 1.0 $\mu$m), and 11% by weight of solid content calculated from an N-methyl-2-pyrrolidone solution of polyamic acid (polyimide precursor) of 14% concentration solid content, and N-methyl-2-pyrrolidone was added to the mixture to obtain a slurry. Next, the slurry was applied on both surfaces of a field copper foil (an electrochemically produced copper foil) having a thickness of 10 $\mu$m by means of a coater and dried, and the thickness was adjusted with a roll press to obtain an electrode structure having an active material layer with a thickness of 25 $\mu$m. This electrode structure was cut to a specified size, then a nickel ribbon lead was attached by spot welding to the top of the electrode to give a negative electrode 603.
The results of a charge/discharge test carried out at fixed current and fixed voltage (maximum voltage of 4.2 V) on a battery prepared in the same way as that in Example 20, showed that the discharge capacities all exceeded 3000 mAh, wherein the average operation voltage was 3.5 V.

(Example 22)

With the exception of preparation of the positive electrode in the below (2) and use of the electrolyte solution in the below (3), a lithium secondary battery was prepared in the same way as that of Example 20, having the cross-sectional structure as shown in FIG. 6 with a 18650 size (diameter 18 mmφ × height 65 mm).

(2) Preparation of the Positive Electrode 606

(i) Lithium citrate and cobalt nitrate were mixed at a mol ratio of 1:3, and 0.1 mol ratio of yttrium nitrate ($Y(NO_3)_3$■$6H_2O$) for Li element of lithium citrate, 0.4 mol ratio of zirconium oxyacetate ($ZrO(CH_3COO)_2$) for Li element and citric acid were added to the mixture to form a solution, which was dissolved in ion-exchanged water. This solution was sprayed in an air stream of 200°C to adjust a fine powder lithium-cobalt oxide precursor.
(ii) The yttrium and zirconium-containing Li-Co oxide precursor prepared in the above was subjected to heat treatment at 850°C in an oxygen atmosphere.
(iii) To 92% by weight of the yttrium, zirconium-containing Li-Co oxide precursor, 3% by weight of a graphite powder and 5% by weight of a polyvinylidene fluoride powder were mixed, then N-methyl-2-pyrrolidone was added to the mixture, and stirred to obtain a slurry.
(iv) The slurry was applied to each surface of the aluminum foil current collector 604 having a thickness of 17 μm, then dried and the thickness of one side of the positive electrode material layer was adjusted with a rollpress machine to 90 μm. An aluminum lead was connected by an ultrasonic welding machine, and dried at 150°C under reduced pressure to manufacture the positive electrode 606.

(3) Preparation Procedure for the Electrolyte Solution

(i) Ethylene carbonate, γ-butyrolactone and diethyl carbonate, from which water had been sufficiently removed respectively were mixed in a volume ratio of 1.5:1.5:7 to obtain a solvent.
(ii) To this solvent 1 M (mol/1) of lithium tetrafluoroborate ($LiBF_4$) was dissolved to obtain an electrolyte solution.

The results of a charge/discharge test carried out at fixed current and fixed voltage (maximum voltage of 4.4 V) on a battery prepared in the same way as that in Example 20, showed that the discharge capacities all exceeded 3700 mAh, wherein the average operation voltage was 3.3 V.
As explained in the above, according to the present invention, silicon alloy particles having a microstructure can be prepared, in which a microcrystal or amorphous material of an element other than silicon is dispersed in microcrystalline silicon or amorphized silicon, by selecting an element composition containing a eutectic, wherein silicon and an element other than silicon constituting the silicon alloy form a uniform solution in a melted state and in which crystallization of silicon intermetallic compounds is less generated.
Further, by doping this silicon alloy fine powder having microstructure with an element such as boron, it is possible to form an electrode material having a low resistance, high charging/discharging efficiency, high capacity for a lithium secondary battery. An electrode structure formed by the electrode material can highly efficiently and repeatedly store and discharge a large amount of lithium. When this electrode structure is used as the negative electrode to form a lithium secondary battery, a secondary battery having a high capacity and a high energy density can be prepared.

Claims

1. An electrode material for a lithium secondary battery, comprising particles of a solid state alloy having silicon as a main component, wherein the particles of the solid state alloy have a microcrystal or amorphous material comprising an element other than silicon, dispersed in microcrystalline silicon or amorphized silicon, and wherein the solid state alloy contains a pure metal or a solid solution, wherein the alloy has an element composition in which the alloy has a single phase in a melted liquid state, wherein the alloy is composed of silicon, at least a first element A and a second element E each having a lower atomic ratio than silicon; the atomic ratio of the first element A is higher than the atomic ratio of the second element E; the first element A is at least one element selected from the group consisting of tin, aluminum and zinc; the second element E is at least one element selected from the group consisting of copper, silver, zinc, titanium, aluminum, vanadium, yttrium, zirconium and boron; and the first element and the second element are different from each other (A ≠ E), wherein the alloy contains a eutectic, and wherein the eutectic is selected from the group consisting of:

(a) a eutectic of silicon and the first element A;
(b) a eutectic of silicon and the second element E;
(c) a eutectic of the first element A and the second element E;
(d) a eutectic of any combination of (a), (b), and (c).

2. The electrode material for a lithium secondary battery according to claim 1, wherein the alloy has a silicon content of 50 weight% or higher and 95 weight% or lower.

3. The electrode material for a lithium secondary battery according to claim 1, wherein the silicon in the alloy is doped with at least one element selected from the group consisting of boron, aluminum, gallium, antinomy and phosphorus at a dopant amount of an atomic ratio in a range of $1 \times 10^{-8}$ to $2 \times 10^{-1}$ with respect to the silicon.

4. The electrode material for a lithium secondary battery according to claim 3, wherein the dopant has an atomic ratio in a range of $1 \times 10^{-5}$ to $1 \times 10^{-1}$ with respect to the silicon.

5. The electrode material for a lithium secondary battery according to claim 3, wherein the dopant is boron.

6. The electrode material for a lithium secondary battery according to claim 1, wherein the particles of the alloy having silicon as a main component or the particles having silicon as a main component have an average particle diameter of 0.02 μm to 5 μm.

7. The electrode material for a lithium secondary battery according to claim 1, wherein the particles of the alloy having silicon as a main component or the particles having silicon as a main component have a form of fine powder.

8. The electrode material for a lithium secondary battery according to claim 1, wherein the particles of the alloy having silicon as a main component are complexed with at least a material selected from the group consisting of a carbonaceous material and metal magnesium.

9. An electrode material for a lithium secondary battery according to claim 1, wherein the alloy is selected from the group consisting of Si-Sn-Ti alloy, Si-Sn-Al alloy, Si-Zn-Al alloy, Si-Al-Cu alloy, Si-Sn-Al-Ti alloy, Si-Sn-Zn alloy, Si-Sn-Ag alloy, Si-Sn-Zn-Ti alloy, Si-Sn-Sb-B alloy, Si-Sn-Cu-B alloy, Si-Sn-Al-B alloy, Si-Sn-Al-Sb alloy, Si-Sn-Al-Sb-B alloy.

10. An electrode material for a lithium secondary battery according to claim 1, wherein

(1) a surface of the particle is covered with a thin oxide of about 2 to 10 nm to prevent the uppermost surface of the particle from rapidly reacting with oxygen;
(2) boron is added to the alloy at the solid solution threshold or more, or yttrium or zirconium is added to make the crystallite size of silicon or the silicon alloy smaller;
(3) when boron is added in (2), an amount of the boron added is in the range of 0.1 to 5% by weight; and
(4) when yttrium or zirconium is added in (2), an amount of the yttrium or the zirconium added is in the range of 0.1 to 1% by weight.

11. An electrode structure comprising an electrode material according to claim 1, 9 or 10, a conductive auxiliary material, a binder and a current collector.

12. The electrode structure according to claim 11, wherein the conductive auxiliary material is a carbonaceous material.

13. A secondary battery comprising an electrolyte, a positive electrode and a negative electrode using an electrode structure according to claim 11, wherein the secondary battery utilizes a lithium oxidation reaction and a lithium ion reduction reaction.

14. The secondary battery according to claim 13, wherein a material of the positive electrode is a lithium-transition metal complex oxide comprising at least yttrium or yttrium and zirconium.

**Patentansprüche**

1. Elektrodenmaterial für eine Lithiumsekundärbatterie, das Teilchen einer Festkörperlegierung mit Silizium als einem Hauptbestandteil umfasst, wobei die Teilchen der Festkörperlegierung ein mikrokristallines oder amorphes Material aufweisen, das ein anderes Element als Silizium umfasst, das in mikrokristallinem Silizium oder amorphisiertem Silizium dispergiert ist, und wobei die Festkörperlegierung ein reines Metall oder eine feste Lösung enthält, wobei die Legierung eine Elementzusammensetzung aufweist, bei welcher die Legierung in einem geschmolzenen Flüssigzustand eine einzige Phase aufweist, wobei die Legierung aus Silizium, zumindest einem ersten Element A und einem zweiten Element E, die jeweils ein niedrigeres Atomverhältnis als Silizium aufweisen, zusammengesetzt ist; wobei das Atomverhältnis des ersten Elements A höher als das Atomverhältnis des zweiten Elements E ist; wobei das erste Element A zumindest ein Element ausgewählt aus der Gruppe bestehend aus Zinn, Aluminium und Zink ist; wobei das zweite Element E zumindest ein Element ausgewählt aus der Gruppe bestehend aus Kupfer, Silber, Zink, Titan, Aluminium, Vanadium, Yttrium, Zirkonium und Bor ist; und wobei das erste Element und das zweite Element sich voneinander unterscheiden (A ≠ E), wobei die Legierung ein Eutektikum enthält, und wobei das Eutektikum ausgewählt ist aus der Gruppe bestehend aus:

   (a) einem Eutektikum von Silizium und dem ersten Element A;
   (b) einem Eutektikum von Silizium und dem zweiten Element E;
   (c) einem Eutektikum des ersten Elements A und des zweiten Elements E;
   (d) einem Eutektikum von einer Kombination von (a), (b), und (c).

2. Elektrodenmaterial für eine Lithiumsekundärbatterie nach Anspruch 1, wobei die Legierung einen Siliziumgehalt von 50 Gew.-% oder mehr und 95 Gew.-% oder weniger aufweist.

3. Elektrodenmaterial für eine Lithiumsekundärbatterie nach Anspruch 1, wobei das Silizium in der Legierung mit zumindest einem Element ausgewählt aus der Gruppe bestehend aus Bor, Aluminium, Gallium, Antimon und Phosphor mit einer Dotierungsmenge eines Atomverhältnisses in einem Bereich von $1 \times 10^{-8}$ bis $2 \times 10^{-1}$ bezüglich des Siliziums dotiert ist.

4. Elektrodenmaterial für eine Lithiumsekundärbatterie nach Anspruch 3, wobei das Dotierungsmittel ein Atomverhältnis in einem Bereich von $1 \times 10^{-5}$ bis $1 \times 10^{-1}$ bezüglich des Siliziums aufweist.

5. Elektrodenmaterial für eine Lithiumsekundärbatterie nach Anspruch 3, wobei das Dotierungsmittel Bor ist.

6. Elektrodenmaterial für eine Lithiumsekundärbatterie nach Anspruch 1, wobei die Teilchen der Legierung, die Silizium als einen Hauptbestandteil aufweist, oder die Teilchen, die Silizium als einen Hauptbestandteil aufweisen, einen mittleren Teilchendurchmesser von 0,02 $\mu$m bis 5 $\mu$m aufweisen.

7. Elektrodenmaterial für eine Lithiumsekundärbatterie nach Anspruch 1, wobei die Teilchen der Legierung, die Silizium als einen Hauptbestandteil aufweist, oder die Teilchen, die Silizium als einen Hauptbestandteil aufweisen, eine Form von feinem Pulver aufweisen.

8. Elektrodenmaterial für eine Lithiumsekundärbatterie nach Anspruch 1, wobei die Teilchen der Legierung, die Silizium als einen Hauptbestandteil aufweist, mit zumindest einem Material ausgewählt aus der Gruppe bestehend aus einem kohlenstoffhaltigen Material und metallischem Magnesium komplexiert sind.

9. Elektrodenmaterial für eine Lithiumsekundärbatterie nach Anspruch 1, wobei die Legierung ausgewählt ist aus der Gruppe bestehend aus Si-Sn-Ti-Legierung, Si-Sn-Al-Legierung, Si-Zn-Al-Legierung, Si-Al-Cu-Legierung, Si-Sn-Al-Ti-Legierung, Si-Sn-Zn-Legierung, Si-Sn-Ag-Legierung, Si-Sn-Zn-Ti-Legierung, Si-Sn-Sb-B-Legierung, Si-Sn-Cu-B-Legierung, Si-Sn-Al-B-Legierung, Si-Sn-Al-Sb-Legierung, Si-Sn-Al-Sb-B-Legierung.

10. Elektrodenmaterial für eine Lithiumsekundärbatterie nach Anspruch 1, wobei

   (1) eine Oberfläche des Teilchens mit einem dünnen Oxid von ungefähr 2 bis 10 nm bedeckt ist, um zu verhindern, dass die oberste Oberfläche der Teilchen rasch mit Sauerstoff reagiert;
   (2) Bor zu der Legierung bei einem Festlösungsschwellwert oder mehr zugegeben ist, oder Yttrium oder Zirkonium zugegeben ist, um die Kristallitgröße von Silizium oder der Siliziumlegierung kleiner zu machen;
   (3) wenn Bor in (2) zugegeben ist, eine Menge des zugegebenen Bors in dem Bereich von 0,1 bis 5 Gew.-%

**EP 1 604 415 B1**

ist; und

(4) wenn Yttrium oder Zirkonium in (2) zugegeben ist, eine Menge des zugegebenen Yttriums oder Zirkoniums in dem Bereich von 0,1 bis 1 Gew.-% ist.

**11.** Elektrodenstruktur, das ein Elektrodenmaterial nach Anspruch 1, 9 oder 10, ein leitfähiges Hilfsmaterial, ein Bindemittel und einen Stromabnehmer umfasst.

**12.** Elektrodenstruktur nach Anspruch 11, wobei das leitfähige Hilfsmaterial ein kohlenstoffhaltiges Material ist.

**13.** Sekundärbatterie, die einen Elektrolyten, eine positive Elektrode und eine negative Elektrode unter Verwendung einer Elektrodenstruktur nach Anspruch 11 umfasst, wobei die Sekundärbatterie eine Lithiumoxidationsreaktion und eine Lithiumionenreduktionsreaktion verwendet.

**14.** Sekundärbatterie nach Anspruch 13, wobei ein Material der positiven Elektrode ein Lithium-Übergangsmetallkomplexoxid ist, das zumindest Yttrium oder Yttrium und Zirkonium umfasst.

## Revendications

**1.** Matériau d'électrode pour une batterie d'accumulateurs au lithium, comprenant des particules d'un alliage à l'état solide comportant du silicium comme constituant principal, dans lequel les particules de l'alliage à l'état solide comportent une matière microcristalline ou amorphe comprenant un élément autre que le silicium, dispersée dans du silicium microcristallin ou silicium amorphe, et dans lequel l'alliage à l'état solide contient un métal pur ou une solution solide, dans lequel l'alliage a une composition élémentaire dans laquelle l'alliage comporte une phase unique à l'état de liquide fondu, dans lequel l'alliage est constitué de silicium, d'au moins un premier élément A et d'un second élément E ayant chacun un rapport atomique inférieur à celui du silicium ; le rapport atomique du premier élément A est supérieur au rapport atomique du second élément E ; le premier élément A est au moins un élément choisi dans le groupe consistant en l'étain, l'aluminium et le zinc ; le second élément E est au moins un élément choisi dans le groupe consistant en le cuivre, l'argent, le zinc, le titane, l'aluminium, le vanadium, l'yttrium, le zirconium et le bore ; et le premier élément et le second élément sont différent l'un de l'autre (A ≠ E), dans lequel l'alliage contient un eutectique, et dans lequel l'eutectique est choisi dans le groupe consistant en :

(a) un eutectique de silicium et du premier élément A ;
(b) un eutectique de silicium et du second élément E ;
(c) un eutectique du premier élément A et du second élément E ;
(d) un eutectique de n'importe quelle combinaison de (a), (b) et (c).

**2.** Matériau d'électrode pour une batterie d'accumulateurs au lithium suivant la revendication 1, dans lequel l'alliage a une teneur en silicium comprise entre une valeur égale ou supérieure à 50 % en poids et une valeur égale ou inférieure à 95 % en poids.

**3.** Matériau d'électrode pour une batterie d'accumulateurs au lithium suivant la revendication 1 dans lequel le silicium dans l'alliage est dopé avec au moins un élément choisi dans le groupe consistant en le bore, l'aluminium, le gallium, l'antimoine et le phosphore en une quantité de dopant correspondant à un rapport atomique dans un intervalle de $1 \times 10^{-8}$ à $2 \times 10^{-1}$ par rapport au silicium.

**4.** Matériau d'électrode pour une batterie d'accumulateurs au lithium suivant la revendication 3, dans lequel le dopant a un rapport atomique dans un intervalle de $1 \times 10^{-5}$ à $1 \times 10^{-1}$ par rapport au silicium.

**5.** Matériau d'électrode pour une batterie d'accumulateurs au lithium suivant la revendication 3, dans lequel le dopant est le bore.

**6.** Matériau d'électrode pour une batterie d'accumulateurs au lithium suivant la revendication 1, dans lequel les particules de l'alliage comportant du silicium comme constituant principal ou les particules comportant du silicium comme constituant principal ont un diamètre moyen de particule de 0,02 $\mu$m à 5 $\mu$m.

**7.** Matériau d'électrode pour une batterie d'accumulateurs au lithium suivant la revendication 1, dans lequel les particules de l'alliage comportant du silicium comme constituant principal ou les particules comportant du silicium comme constituant principal sont sous forme d'une poudre fine.

8. Matériau d'électrode pour une batterie d'accumulateurs au lithium suivant la revendication 1, dans lequel les particules de l'alliage comportant du silicium comme constituant principal sont complexées avec au moins une matière choisie dans le groupe consistant en une matière carbonée et du magnésium métallique.

9. Matériau d'électrode pour une batterie d'accumulateurs au lithium suivant la revendication 1, dans lequel l'alliage est choisi dans le groupe consistant en un alliage Si-Sn-Ti, un alliage Si-Sn-Al, un alliage Si-Zn-Al, un alliage Si-Al-Cu, un alliage Si-Sn-Al-Ti, un alliage Si-Sn-Zn, un alliage Si-Sn-Ag, un alliage Si-Sn-Zn-Ti, un alliage Si-Sn-Sb-B, un alliage Si-Sn-Cu-B, un alliage Si-Sn-Al-B, un alliage Si-Sn-Al-Sb et un alliage Si-Sn-Al-Sb-B.

10. Matériau d'électrode pour une batterie d'accumulateurs au lithium suivant la revendication 1, dans lequel

(1) une surface de la particule est couverte d'un oxyde mince d'environ 2 à 10 nm pour éviter la réaction rapide de la surface extérieure de la particule avec l'oxygène,
(2) du bore est ajouté à l'alliage à une valeur égale ou supérieure au seuil de solution solide, ou bien de l'yttrium ou du zirconium est ajouté pour diminuer les dimensions de cristallite du silicium ou de l'alliage de silicium ;
(3) lorsque du bore est ajouté en (2), la quantité de bore ajoutée est comprise dans l'intervalle de 0,1 à 5 % en poids ; et
(4) lorsque de l'yttrium ou du zirconium est ajouté en (2), la quantité d'yttrium ou de zirconium ajoutée est comprise dans l'intervalle de 0,1 à 1 % en poids.

11. Structure d'électrode comprenant un matériau d'électrode suivant la revendication 1, 9 ou 10, une matière auxiliaire conductrice, un liant et un collecteur de courant.

12. Structure d'électrode suivant la revendication 11, dans laquelle la matière auxiliaire conductrice est une matière carbonée.

13. Batterie d'accumulateurs comprenant un électrolyte, une électrode positive et une électrode négative utilisant une structure d'électrode suivant la revendication 11, ladite batterie d'accumulateurs utilisant une réaction d'oxydation du lithium et une réaction de réduction de l'ion lithium.

14. Batterie d'accumulateurs suivant la revendication 13, dans laquelle la matière de l'électrode positive est un oxyde complexe de lithium-métal de transition comprenant au moins de l'yttrium ou de l'yttrium et du zirconium.

# FIG. 1A

101

102

100

# FIG. 1B

103

102

101

100

## FIG. 2A

## FIG. 2B

## FIG. 2C

# FIG. 3A

301

}302

300

# FIG. 3B

303    304    305

301

}302

300

# FIG. 4

# FIG. 5

# FIG. 6

EP 1 604 415 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6051340 A
- US 5795679 A
- US 6432585 B
- JP H11283627 B
- JP 2000311681 A
- WO 0017949 A
- JP 2000215887 A
- EP 1313158 A
- EP 1274140 A
- WO 0221616 A
- JP 2001243946 A

- EP 1102339 A
- EP 1100134 A
- JP 2000357515 A
- EP 1028476 A
- JP 11007979 A
- EP 0883199 A
- JP 10162823 A
- JP 2002042805 A
- JP 2003109590 A
- JP 2003077529 A